# EUROPEAN PATENT APPLICATION

(11) **EP 4 293 803 A1**
(43) Date of publication of application: **20.12.2023**
(21) Application number: 22752331.3
(22) Date of filing: 10.02.2022
(51) Int. Cl.: H01M 50/204, H01M 50/269, B25F 5/00, H01R 13/04

(54) **ELECTRICAL INTERFACE, BATTERY PACK, EXTERNAL DEVICE, AND ELECTRICAL COMBINATION**

(30) Priority: 10.02.2021 CN 202110183952
(71) Applicant: Positec Power Tools (Suzhou) Co., Ltd., Suzhou, Jiangsu 215123 (CN)
(72) Inventor: WANG, Liangjun, Suzhou, Jiangsu 215123 (CN); CESTONARO, Igor·Andrea, Suzhou, Jiangsu 215123 (CN); LOU, Weidong, Suzhou, Jiangsu 215123 (CN); JIANG, Kun, Suzhou, Jiangsu 215123 (CN); WU, Jie, Suzhou, Jiangsu 215123 (CN)
(74) Representative: Dentons UK and Middle East LLP
(86) International application number: PCT/CN2022/075842
(87) International publication number: WO 2022/171171

(57) **Abstract**

The present disclosure relates to a first electrical interface arranged on one of a battery pack and an external device. The battery pack is engaged to the external device. The first electrical interface includes a first sliding groove and a second sliding groove which extend in an engaging direction, and are configured for guiding the battery pack to be mechanically connected with the external device. The first electrical interface further includes a plurality of first terminals configured for being electrically connected with corresponding terminals of the other one of the battery pack and the external device. At least one first terminal is at least partially accommodated in the first sliding groove, and/or at least one first terminal is at least partially accommodated in the second sliding groove. Thus, the size of the first electrical interface can be effectively reduced, which facilitates users to use and carry. In addition, a second electrical interface, a battery pack, an external device and an electrical combination are further provided.

## Description

### BACKGROUND

### Technical Field

The present disclosure relates to an electrical interface, a battery pack, an external device and an electrical combination.

### Related Art

A battery pack serves as a portable and reusable energy source, which is widely applied to various fields such as electric tools and household products.

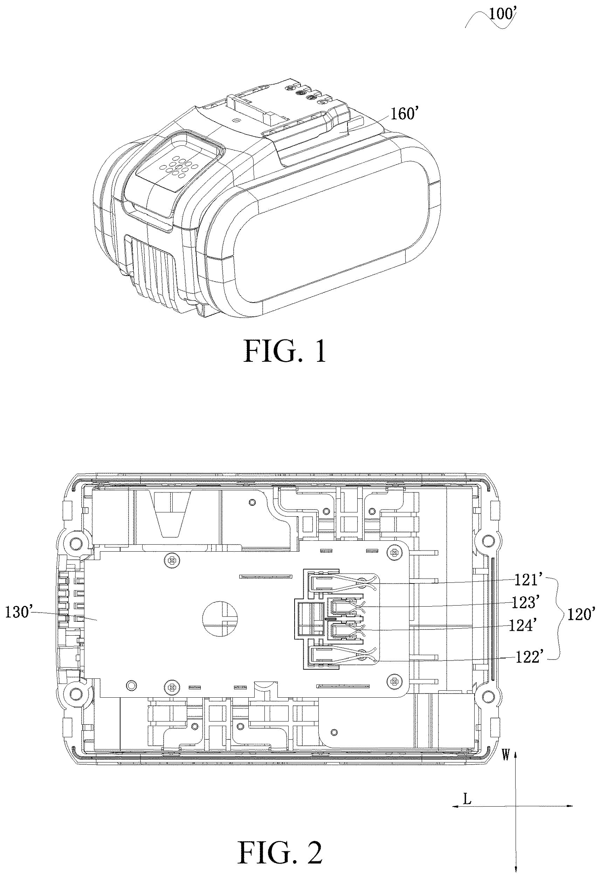

FIG. 1 illustrates a schematic solid diagram of a battery pack 100' in the prior art. FIG. 2 illustrates a top view of the battery pack 100' without an upper housing in the prior art. A battery pack terminal 120' sequentially includes: a battery pack positive terminal 121', a battery pack negative terminal 122', and battery pack signal terminals 123' and 124'. The battery pack terminals 120' to 124' are electrically connected to a circuit board 130'. The battery pack terminals 120' to 124' are located between a pair of sliding grooves 160', and are spaced in a width direction W.

The battery pack terminal 120' transversely spans across a middle area of the circuit board 130', causing those wires of electronic components on the circuit board 130' are required to bypass the battery pack terminal 120', which leads to inconvenient wiring. Meanwhile, an actual usage area of the circuit board is reduced, the structure is not compact, the size of a battery pack interface is increased, the overall size of the battery pack will also be increased, and meanwhile, the size of an external device interface and an external device which are engaged to the battery pack is increased, bringing inconvenience to users for using and carrying.

Therefore, it is necessary to improve the prior art.

### SUMMARY

In order to overcome defects in the prior art, the problem to be solved by the present disclosure is to provide an electrical interface compact in structure and small in size.

The present disclosure adopts the technical solution for solving the existing technical problem:
A first electrical interface is arranged on one of a battery pack and an external device. The battery pack is configured for engaging to the external device, and the first electrical interface includes a first sliding groove and a second sliding groove which extend in an engaging direction, and are configured for guiding the battery pack to be mechanically connected with the external device; the first electrical interface further includes a plurality of first terminals configured for being electrically connected with corresponding terminals of the other one of the battery pack and the external device; and at least one first terminal is at least partially accommodated in the first sliding groove, and/or at least one first terminal is at least partially accommodated in the second sliding groove.

The first terminals adopt the above arrangement manner, such that the space of the first sliding groove and the second sliding groove can be effectively utilized, meanwhile, the space of a circuit board can be effectively utilized while wiring of electronic components on the circuit board cannot be influenced, the structure is compact, and the size of the first electrical interface can be smaller, which facilitates a user to use and carry.

Optionally, the first terminals are at least partially accommodated in the first sliding groove and/or the second sliding groove.

Optionally, the number of first terminals at least partially accommodated in the first sliding groove is equal to the number of first terminals at least partially accommodated in the second sliding groove.

Optionally, the first terminals comprise at least one first positive terminal and at least one first negative terminal, the first positive terminal and the first negative terminal are configured for transmitting power, the first positive terminal is at least partially accommodated in the first sliding groove, and the first negative terminal is at least partially accommodated in the second sliding groove.

Optionally, the first terminals further comprise at least one first signal terminal, the first signal terminal is configured for transmitting control signals, the first terminals at least partially accommodated in the first sliding groove comprise the first positive terminal and at least one first signal terminal, and/or the first terminals at least partially accommodated in the second sliding groove comprise the first negative terminal and at least one first signal terminal.

Optionally, one of the battery pack and the external device comprises an initial end and a tail end which are opposite in the engaging direction, when the battery pack is engaged to the external device, the initial end makes contact with the other one of the battery pack and the external device earlier than the tail end, and the first signal terminal is closer to the initial end relative to the first positive terminal or the first negative terminal.

Optionally, the first sliding groove and the second sliding groove respectively comprise a pair of side walls which extend in the engaging direction and are oppositely arranged, a bottom wall arranged between the pair of side walls, and at least one first terminal is at least partially exposed from openings formed in the side walls and/or the bottom wall.

Optionally, the first sliding groove and the second sliding groove respectively comprise a pair of side walls which extend in the engaging direction and are oppositely arranged, a bottom wall arranged between the pair of side walls, and at least one first terminal is at least partially arranged on the side walls and/or the bottom wall.

Optionally, the other one of the battery pack and the external device comprises a second electrical interface, the second electrical interface further comprises a plurality of second terminals correspondingly connected with the first terminals, the first terminal has an elastic contact portion, the second terminal has an engaging portion configured for being matched with the engaging portion, and the contact portion makes contact with the engaging portion only on one side of the engaging direction.

Optionally, when the contact portion is matched with the engaging portion, the positive pressure exerted on the contact portion ranges from 0 to 100 N.

Optionally, when the contact portion is matched with the engaging portion, the amount of elastic deformation of the contact portion ranges from 0 to 1.5 mm.

Optionally, wherein the elasticity modulus of the contact portion ranges from 100,000 to 150,000 MPa.

Optionally, the contact portion is set to be arc shape, and the engaging portion is set to be in a flat plate shape.

The present disclosure further provides a second electrical interface which is configured for engaging to the first electrical interface. The second electrical interface is arranged on the other one of the battery pack and the external device, and further includes a first sliding rail and a second sliding rail which extend in the engaging direction. The first sliding rail is matched with the first sliding groove, and the second sliding rail is matched with the second sliding groove to guide engagement between the external device and the battery pack. The second electrical interface includes a plurality of second terminals, and the second terminal is matched with the first terminal to realize electrical connection between the second electrical interface and the first electrical interface.

Optionally, at least one second terminal is at least partially located on the first sliding rail, and/or at least one second terminal is at least partially located on the second sliding rail.

Optionally, projection areas, in a plane perpendicular to the engaging direction, of at least one second terminal and the first sliding rail are at least partially overlapped, and/or projection areas, in the plane perpendicular to the engaging direction, of at least one second terminal and the second sliding rail are at least partially overlapped.

Optionally, the second terminals are at least partially located on the first sliding rail and/or the second sliding rail.

Optionally, the number of second terminals at least partially located on the first sliding rail is equal to the number of second terminals at least partially located on the second sliding rail.

Optionally, the second terminals further comprise at least one second positive terminal and at least one second negative terminal, the second positive terminal and the second negative terminal can be respectively electrically connected with the corresponding terminals of the first electrical interface, the second positive terminal is at least partially located on the first sliding rail, and/or the second negative terminal is at least partially located on the second sliding rail.

Optionally, the second terminals further comprise at least one second signal terminal, the second positive terminal and the at least one second signal terminal are at least partially located on the first sliding rail, and/or the second negative terminal and the at least one second signal terminal are at least partially located on the second sliding rail.

Optionally, the other one of the battery pack and the external device comprises a first end and a second end which are opposite in the engaging direction, when the battery pack is engaged to the external device, the first end makes contact with one of the battery pack and the external device earlier than the second end, and the second positive terminal or the second negative terminal is closer to the first end relative to the second signal terminal.

Optionally, the first sliding rail and the second sliding rail both comprise a pair of side edges which extend in the engaging direction and are oppositely arranged, a bottom edge arranged between the pair of side edges, and at least one second terminal is at least partially exposed from openings formed in the side edges and/or the bottom edge.

Optionally, the first sliding rail and the second sliding rail both comprise a pair of side edges which extend in the engaging direction and are oppositely arranged, a bottom edge arranged between the pair of side edges, and at least one second terminal is at least partially arranged on the side edges and/or the bottom edge.

Optionally, the second terminal has an elastic contact portion, the first terminal has the engaging portion matched with the contact portion, and the contact portion makes contact with the engaging portion only on one side of the engaging direction.

Optionally, when the contact portion is matched with the engaging portion, the positive pressure exerted on the contact portion ranges from 0 to 100 N.

Optionally, when the contact portion is matched with the engaging portion, the amount of elastic deformation of the contact portion ranges from 0 to 1.5 mm.

Optionally, the elasticity modulus of the contact portion ranges from 100,000 to 150,000 MPa.

Optionally, wherein the contact portion is set to be arc shape, and the engaging portion is set to be in a flat plate shape.

The present disclosure further provides a battery pack, including the above first electrical interface or the above second electrical interface.

The present disclosure further provides an external device, including the above first electrical interface or the above second electrical interface.

Optionally, the external device is set as any one of an electric tool, a household appliance, a charger and an adapter.

The present disclosure further provides an electrical combination, the electrical combination comprises a battery pack and an external device which can be engaged to each other, the battery pack is set as the above battery pack, and the external device is set as the above external device.

The present disclosure further provides a battery pack which is compact in structure, small in size, and convenient to use and carry.

In order to realize the above objectives, the present disclosure provides a battery pack capable of being engaged to an external device, the battery pack comprising: a housing accommodating a plurality of electrically-connected cells; and a plurality of battery pack terminals, the battery pack terminals include a battery pack positive terminal, a battery pack negative terminal and at least one battery pack signal terminal, the battery pack positive terminal and the battery pack negative terminal are respectively electrically connected to the cells. The battery pack signal terminal transmits control signals of the battery pack, each battery pack terminal can be electrically connected to the corresponding terminal of the external device, the battery pack terminals are arranged in two columns, and at least one column of battery pack terminals are spaced in the engaging direction.

Optionally, in a plane perpendicular to the engaging direction, of the same-column battery pack terminals are at least partially overlapped.

Optionally, the battery pack terminal comprises at least one contact portion, the contact portion is in elastic fit with the corresponding terminal of the external device, such that the battery pack terminals are electrically connected with the terminals of the external device, and projection areas, in the plane perpendicular to the engaging direction, of the same-column battery pack terminals are at least partially overlapped.

Optionally, each column has the same number of battery pack terminals.

Optionally, the battery pack positive terminal is located in one column, and the battery pack negative terminal is located in the other column.

Optionally, the battery pack positive terminal and the at least one battery pack signal terminal are spaced in the engaging direction, and/or the battery pack negative terminal and the at least one battery pack signal terminal are spaced in the engaging direction.

Optionally, the battery pack comprises an initial end and a tail end which are opposite in the engaging direction, when the battery pack is engaged to the external device, the initial end makes contact with the external device earlier than the tail end, and the battery pack signal terminal is closer to the initial end relative to the battery pack positive terminal or the battery pack negative terminal.

Optionally, in a height direction, the battery pack positive terminal and the battery pack signal terminal located in the same column are staggered from each other, and the battery pack negative terminal and the battery pack signal terminal located in the same column are staggered from each other.

Optionally, in a width direction, the battery pack positive terminal and the battery pack signal terminal located in the same column are staggered from each other, and the battery pack negative terminal and the battery pack signal terminal located in the same column are staggered from each other.

Optionally, the battery pack positive terminal is configured for being engaged to the external device positive terminal, the battery pack negative terminal is configured for being engaged to the external device negative terminal, in the engaging direction, a shortest distance between the battery pack positive terminal and the battery pack signal terminal located in the same column is greater than the size of the external device positive terminal, and/or a shortest distance between the battery pack negative terminal and the battery pack signal terminal located in the same column is greater than the size of the external device negative terminal.

The present disclosure provides an external device, including an external device interface. The external device interface is configured for being engaged to the above battery pack and the external device interface comprises a plurality of external device terminals, the external device terminals comprise an external device positive terminal, an external device negative terminal and at least one external device signal terminal all of which can be respectively electrically connected with the corresponding terminals of the battery pack, the external device terminals are arranged in two columns, and at least one column of external device terminals are spaced in the engaging direction.

Optionally, projection areas, in a plane perpendicular to the engaging direction, of the same-column external device terminals are at least partially overlapped.

Optionally, each external device terminal comprises at least one engaging portion, the engaging portions are in elastic fit with the battery pack terminals so as to realize electrical connection of the external device terminals and the battery pack terminals, and projection areas, in the plane perpendicular to the engaging direction, of the engaging portions of the same-column external device terminals are at least partially overlapped.

Optionally, each column has the same number of external device terminals.

Optionally, the external device positive terminal is located in one column, and the external device negative terminal is located in the other column.

Optionally, the external device positive terminal and the external device signal terminal are spaced in the engaging direction, and/or the external device negative terminal and the external device signal terminal are spaced in the engaging direction.

Optionally, the external device interface comprises a first end and a second end which are opposite in the engaging direction, when the external device is engaged to the battery pack, the first end makes contact with the battery pack earlier than the second end, and the external device positive terminal or the external device negative terminal is closer to the first end relative to the external device signal terminal.

Optionally, in a height direction, the external device positive terminal or the external device negative terminal and the external device signal terminal located in the same column are staggered from each other.

Optionally, in a width direction, the external device positive terminal or the external device negative terminal and the external device signal terminal located in the same column are staggered from each other.

Optionally, the external device positive terminal is configured for being engaged to the battery pack positive terminal, the external device negative terminal is configured for being engaged to the battery pack negative terminal, in the engaging direction, the size of the external device positive terminal is less than the shortest distance between the battery pack positive terminal and the battery pack signal terminal located in the same column, and the size of the external device negative terminal is less than the shortest distance between the battery pack negative terminal and the battery pack signal terminal located in the same column.

Optionally, the external device is set as an electrical device or an adapter, and the electrical device is set as any one of an electric tool, a household appliance and a charger.

Optionally, the external device is set as the adapter, the adapter further comprises a first adapter interface configured for being engaged to the electrical device, the electrical device further comprises an electrical device interface engaged to the first adapter interface, the electrical device interface cannot be adaptive to the battery pack according to any one of claims 33 to 42, and the electrical device is set as any one of the electric tool, the household appliance and the charger.

Optionally, the first adapter interface comprises a plurality of first adapter terminals configured for being electrically connected with the corresponding terminals of the electrical device, and spaced in a width direction.

Optionally, the first adapter interface comprises a cable and a connector, one end of the connector is configured for being connected with the cable, and the other end of the connector is configured for being connected with the external device.

Optionally, one end of the connector is fixedly connected with the cable, and the other end of the connector is detachably connected with the external device.

Optionally, the first adapter interface comprises a plurality of first adapter terminals arranged in the connector, and the first adapter terminals are configured for being electrically connected with the corresponding terminals of the electrical device and are set as pins.

The present disclosure further provides an electrical combination, the electrical combination includes the above battery pack or the above external device, or the electrical combination includes the above battery pack, the above electrical device, and the adapter.

The present disclosure further provides an electrical combination, the electrical combination includes an electrical device, the above battery pack, and the above external device, the electrical device includes an electrical device interface, the electrical device interface cannot be adaptive to the above battery pack, and the electrical device is set as any one of an electric tool, a household appliance and a charger.

### BRIEF DESCRIPTION OF THE DRAWINGS

The above objectives, technical solutions and beneficial effects of the present disclosure can be clearly obtained through detailed descriptions of following specific embodiments capable of implementing the present disclosure, and descriptions of the drawings.
FIG. 1 is a schematic diagram of a battery pack in the prior art.
FIG. 2 is a schematic diagram of the battery pack without an upper housing in FIG. 1.
FIG. 3 is a schematic diagram of an electrical combination according to an embodiment.
FIG. 4 is a schematic diagram of engagement of an external device and a battery pack in FIG. 3.
FIG. 5 is a schematic diagram of the external device in FIG. 3.
FIG. 6, FIG.7 and FIG. 8 are schematic solid diagrams of the battery pack in FIG. 3 in different view angles.
FIG. 9 is a schematic diagram of the battery pack without an upper housing in FIG. 3.
FIG. 10 is a schematic diagram of arrangement of first terminals in FIG. 3.
FIG. 11 is a schematic diagram of arrangement of second terminals in FIG. 3.
FIG. 12 is a schematic diagram of arrangement of first terminals according to an embodiment.
FIG. 13 is a schematic diagram of arrangement of second terminals matched with the first terminals in FIG. 12.
FIG. 14 is a schematic diagram of arrangement of first terminals according to an embodiment.
FIG. 15 is a schematic diagram of arrangement of second terminals matched with the first terminals in FIG. 14.
FIG. 16 is a schematic diagram of arrangement of first terminals according to an embodiment.
FIG. 17 is a schematic diagram of arrangement of second terminals matched with the first terminals in FIG. 16.
FIG. 18 is a schematic diagram of arrangement of first terminals according to an embodiment.
FIG. 19 is a schematic diagram of arrangement of second terminals matched with the first terminals in FIG. 18.
FIG. 20 is a schematic diagram that first terminals are located on one side wall of a sliding groove according to an embodiment.
FIG. 21 is a schematic diagram that first terminals are located on the other side wall of a sliding groove according to an embodiment.
FIG. 22 is a schematic diagram that second terminals engaged to the first terminals in FIG. 21 are located on corresponding side edges of sliding rails.
FIG. 23 is a schematic diagram of a first electrical interface with first terminals having engaging portions according to an embodiment.
FIG. 24 is a schematic diagram of a second electrical interface engaged to the first electrical interface in FIG. 23.
FIG. 25 is a schematic diagram that a second electrical interface is located on a battery pack according to an embodiment.
FIG. 26 is a schematic diagram of a first electrical interface engaged to the second electrical interface in FIG. 25.
FIG. 27 is a schematic diagram that a second electrical interface is located on a battery pack according to an embodiment.
FIG. 28 is a schematic diagram of a first electrical interface engaged to the second electrical interface in FIG. 27.
FIG. 29 is a schematic diagram of the first terminals in FIG. 3.
FIG. 30 is a schematic diagram of the second terminals in FIG. 3.
FIG. 31 is a schematic diagram of first terminals according to an embodiment.
FIG. 32 is a schematic diagram of second terminals engaged to the first terminals in FIG. 31.

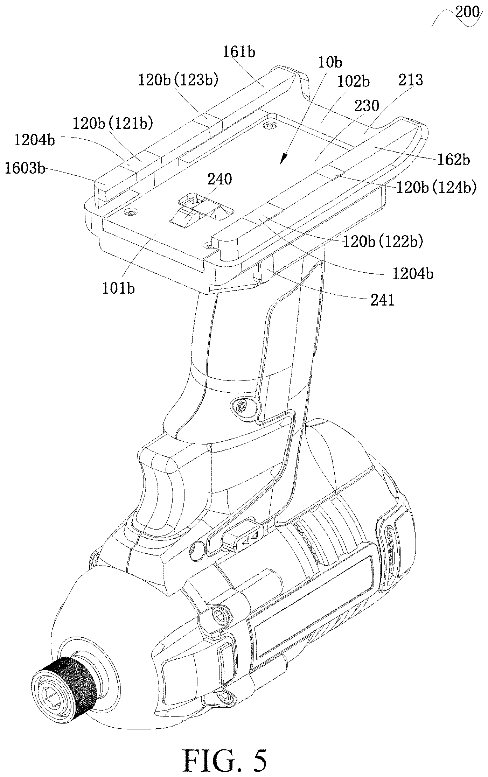

FIG. 5 is a schematic solid diagram that battery pack terminals shown in FIG. 1 are located on bottom walls of sliding grooves.

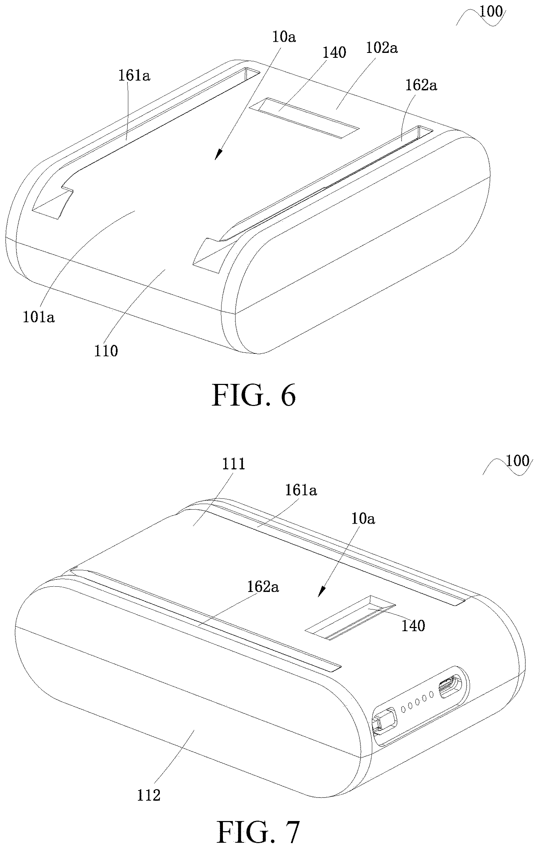

FIG. 6 and FIG. 7 are schematic solid diagrams that the battery pack terminals shown in FIG. 1 are located on side walls of the sliding grooves.

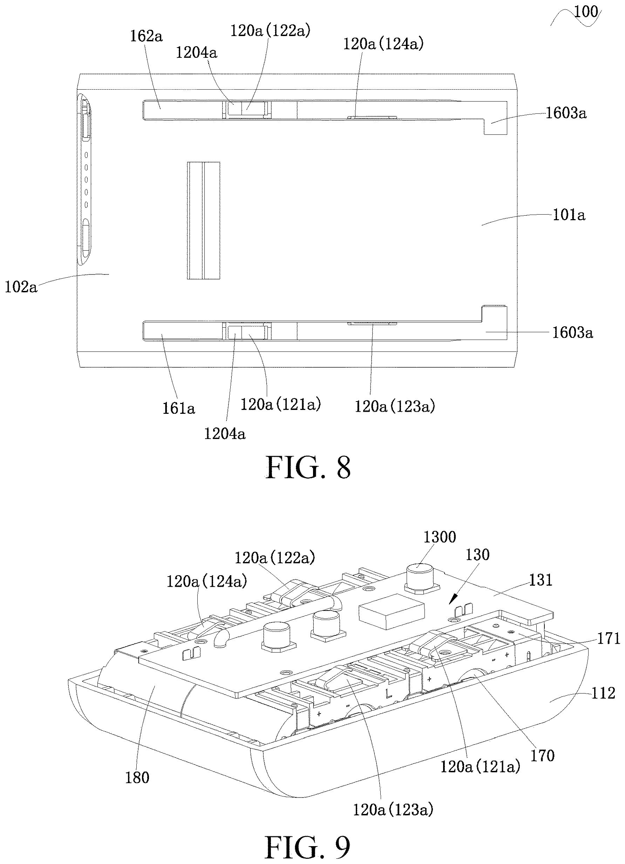

FIGs. 8 to 12 are schematic diagrams of different arrangement manners of the battery pack terminals shown in FIG. 1.

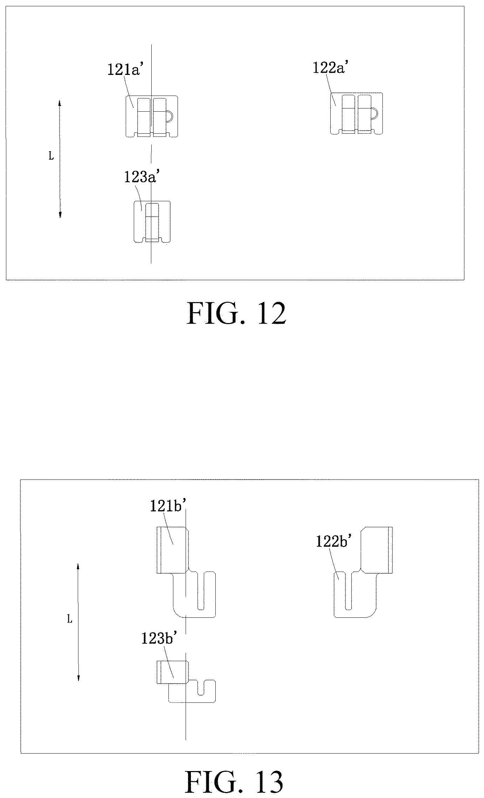

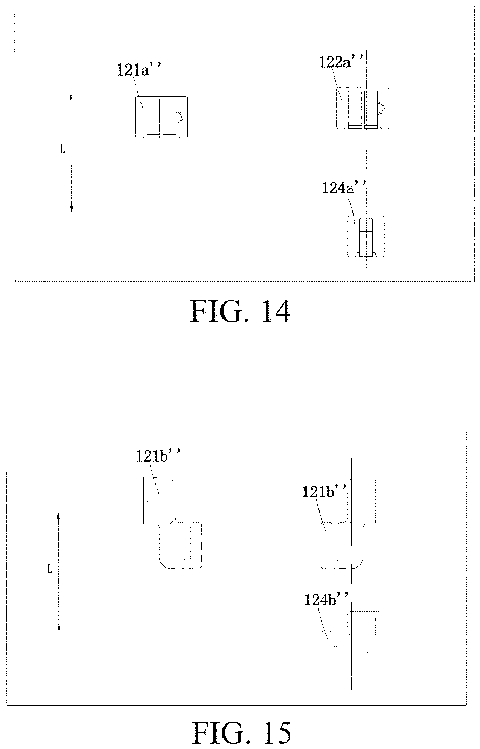

FIG. 13 and FIG. 14 are schematic diagrams of arrangement of external device terminals or adapter terminals engaged to the battery pack terminals shown in FIG. 1.
FIG. 15 is a schematic solid diagram of a battery pack in the prior art.

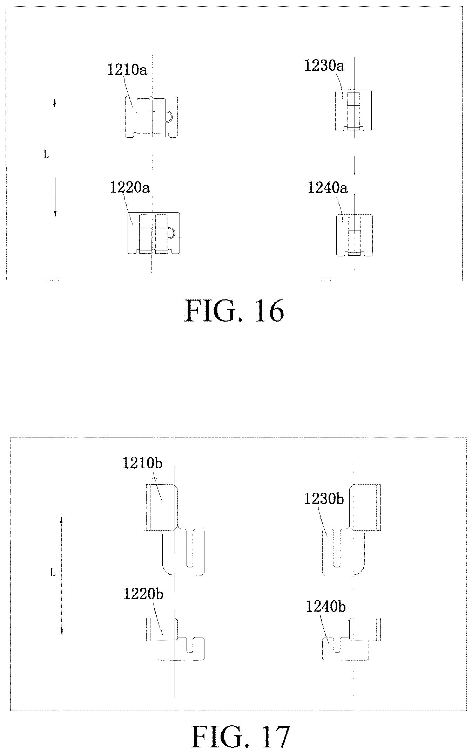

FIG. 16 is a top view of the battery pack without a first housing in the prior art.
FIG. 17 is a top view of the battery pack without a first housing in FIG. 1.

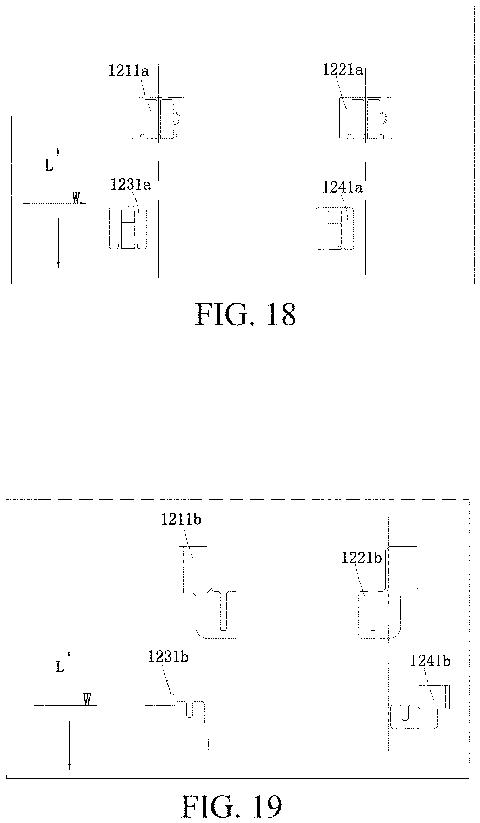

FIG. 18 is a schematic solid diagram of the battery pack without the first housing in FIG. 1.
FIG. 19 is a side view of the battery pack without the first housing in FIG. 1.

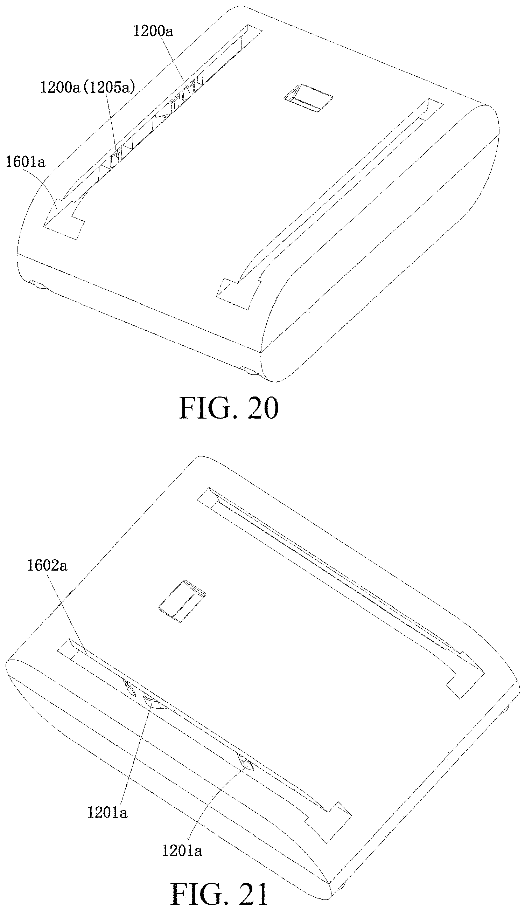

FIG. 20 and FIG. 21 are schematic solid diagrams of the battery pack terminals shown in FIG. 1.

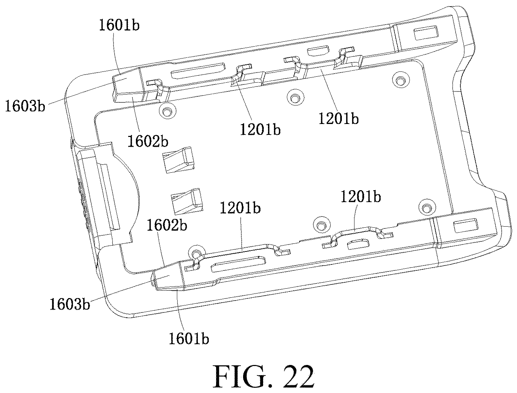

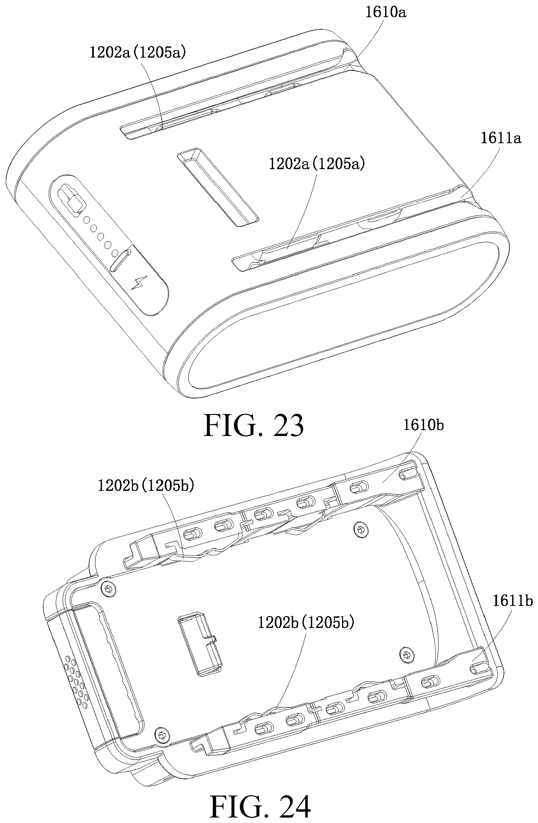

FIG. 22 and FIG. 23 are schematic solid diagrams of external device terminals or adapter terminals engaged to the battery pack terminals shown in FIG. 1.
FIG. 24 to 27 are schematic sectional solid diagrams of engagement of the battery pack terminals shown in FIG. 1 and corresponding external device terminals or adapter terminals.

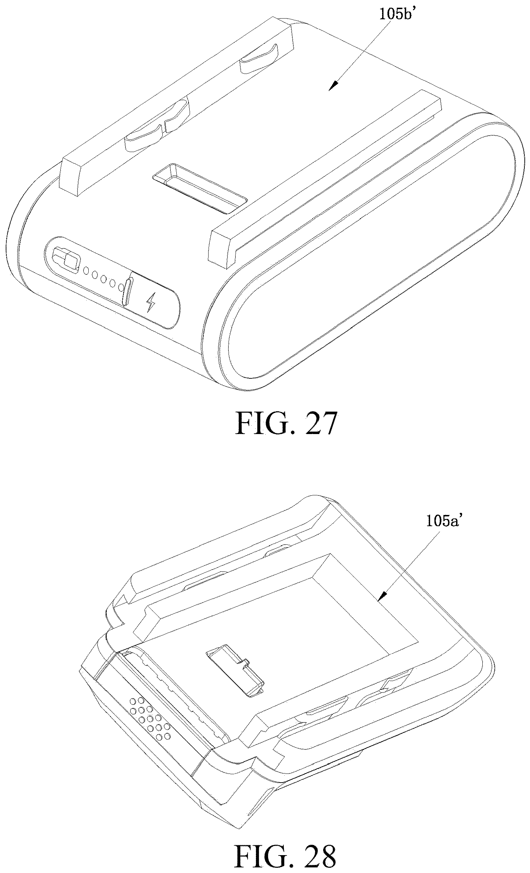

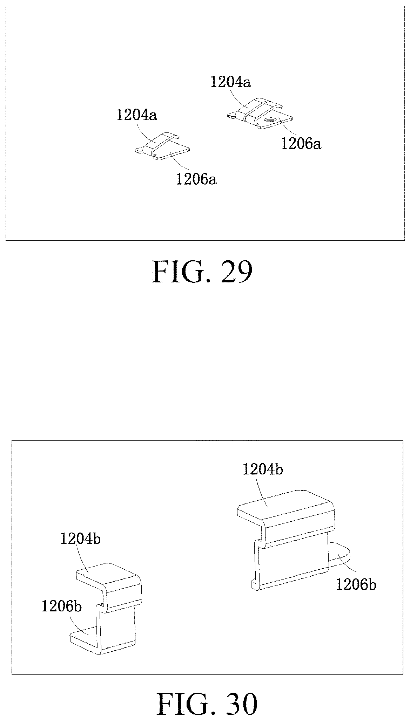

FIG. 28 and FIG. 29 are section views of engagement of the battery pack terminals shown in FIG. 1 and corresponding external device terminals or adapter terminals.
FIG. 30 is a schematic solid diagram of an external device according to an embodiment of the present disclosure.

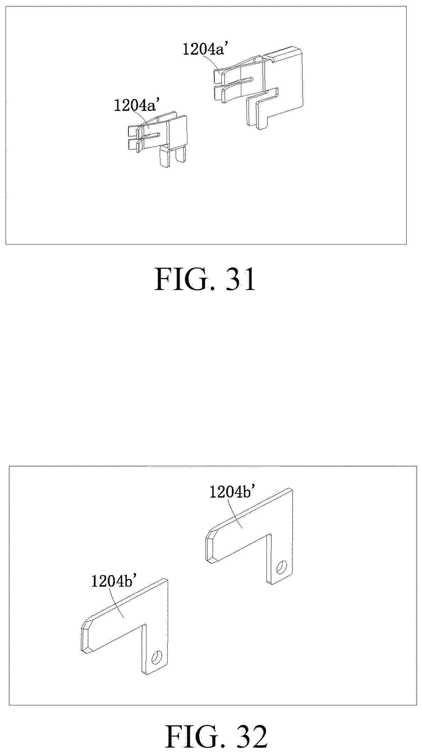

FIG. 31 is a side view of the external device shown in FIG. 30.

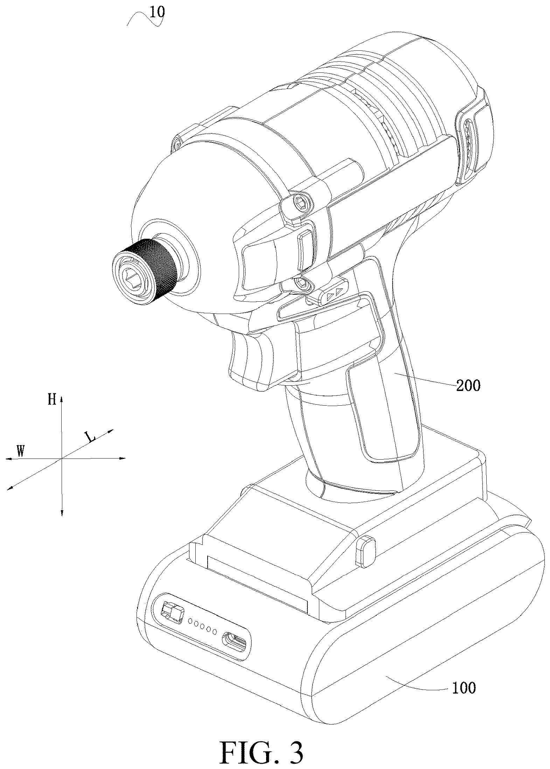

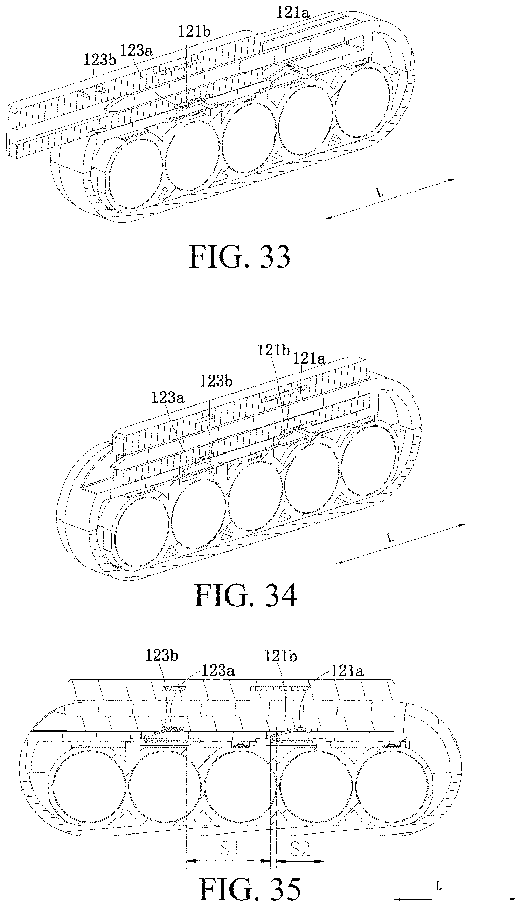

FIG. 33 is a broken-out section view of engagement time of the first terminals the second terminals shown in FIG. 3.
FIG. 34 is a broken-out section view of completed engagement of the first terminals and the second terminals shown in FIG. 3.
FIG. 35 is a broken-out section side view of completed engagement of the first terminals and the second terminals shown in FIG. 3.

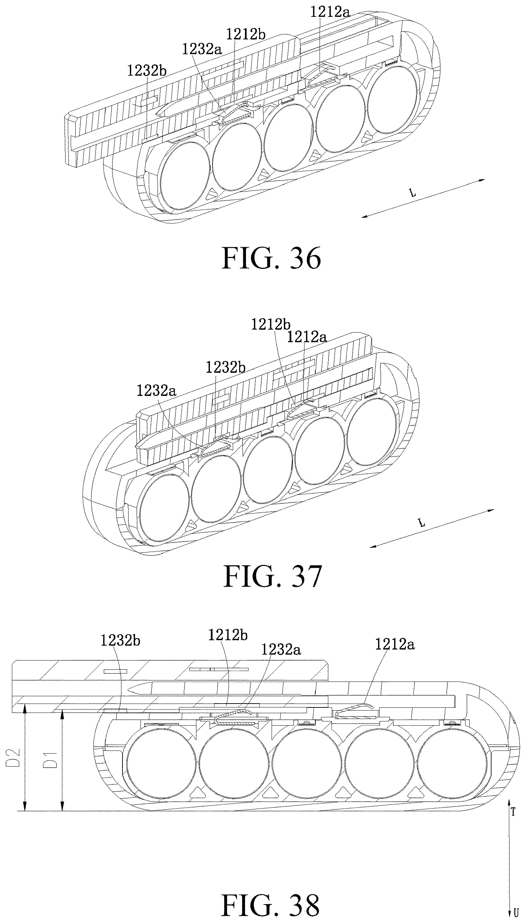

FIG. 36 is a broken-out section view of engagement time of first terminals and second terminals according to an embodiment.
FIG. 37 is a broken-out section view of completed engagement of the first terminals and the second terminals shown in FIG. 36.
FIG. 38 is a broken-out section side view of completed engagement of the first terminals and the second terminals shown in FIG. 36.

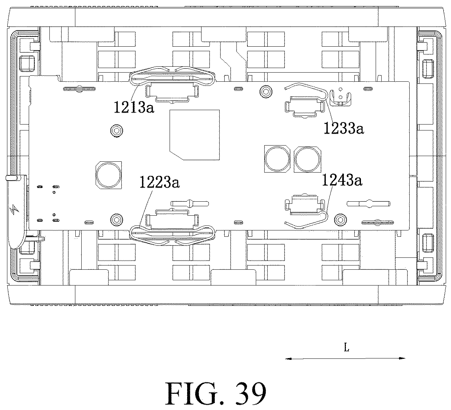

FIG. 39 is a location diagram of first terminals according to an embodiment.

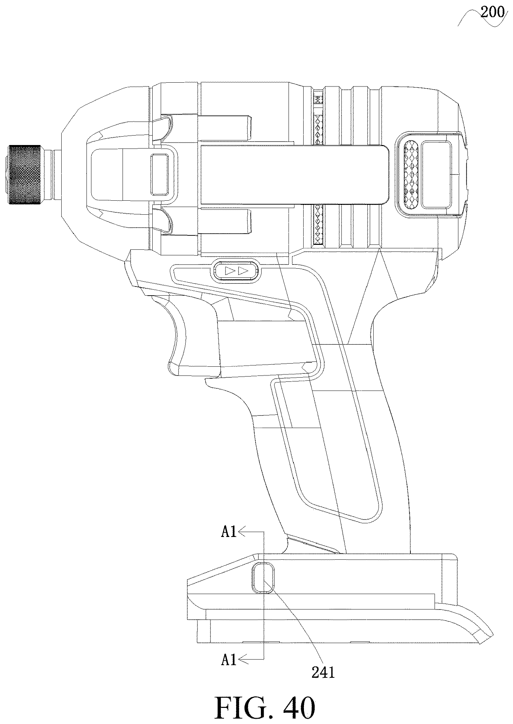

FIG. 40 is a schematic side view of the external device in FIG. 3.

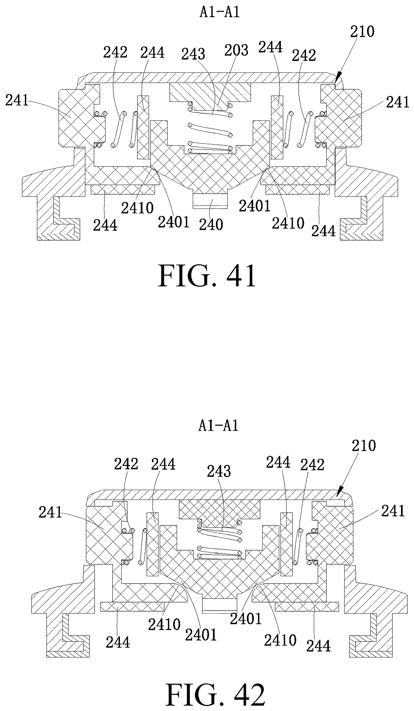

FIG. 41 is a section view in an A1-A1 direction in FIG. 40 when unlocking portions of the external device shown in FIG. 3 are not triggered.
FIG. 42 is a section view in the A1-A1 direction in FIG. 40 when the unlocking portions of the external device shown in FIG. 3 are triggered.

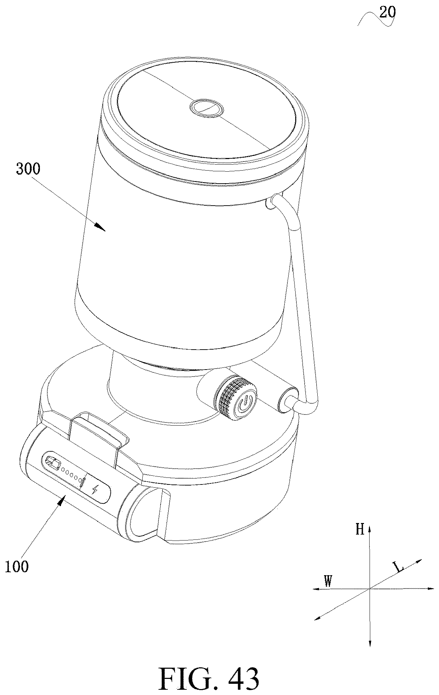

FIG. 43 is a schematic diagram of an electrical combination according to an embodiment.

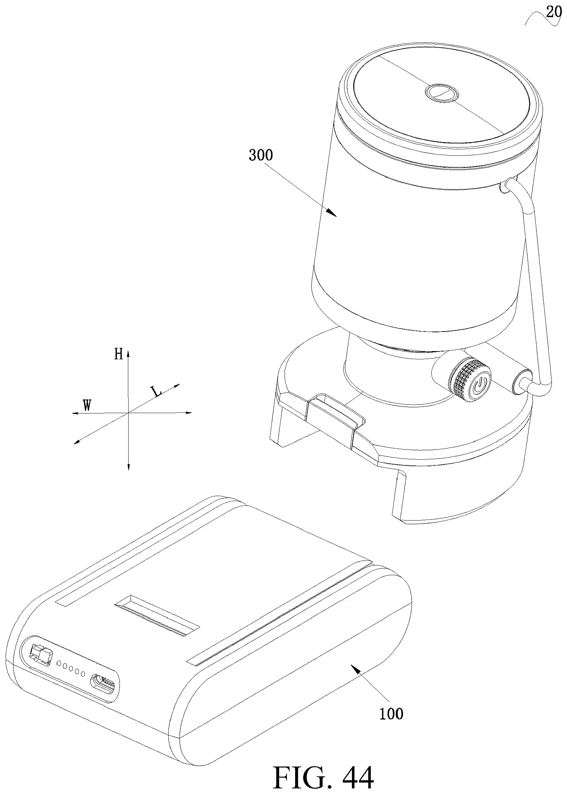

FIG. 44 is a schematic diagram of engagement time of an external device and a battery pack in FIG. 43.

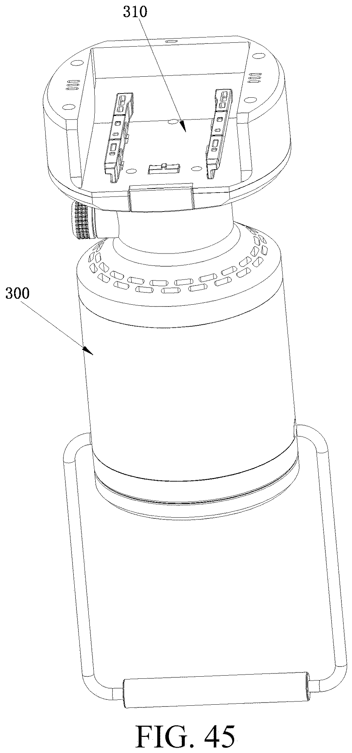

FIG. 45 is a schematic diagram of the external device in FIG. 43.

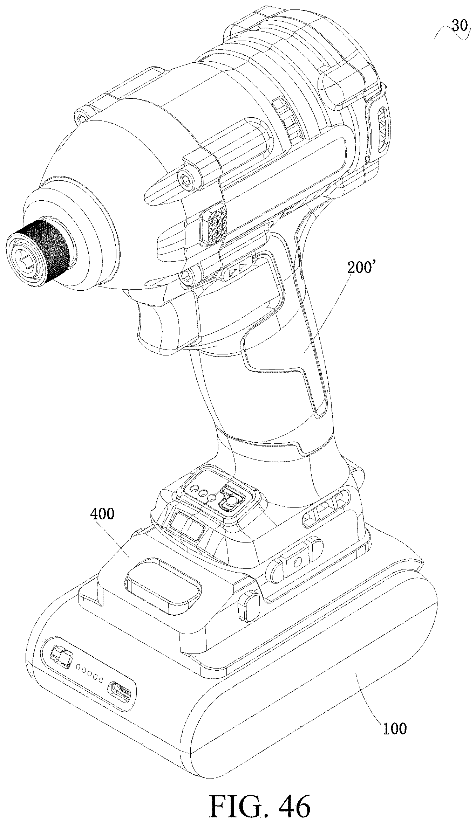

FIG. 46 is a schematic diagram of an electrical combination according to an embodiment of the present disclosure.

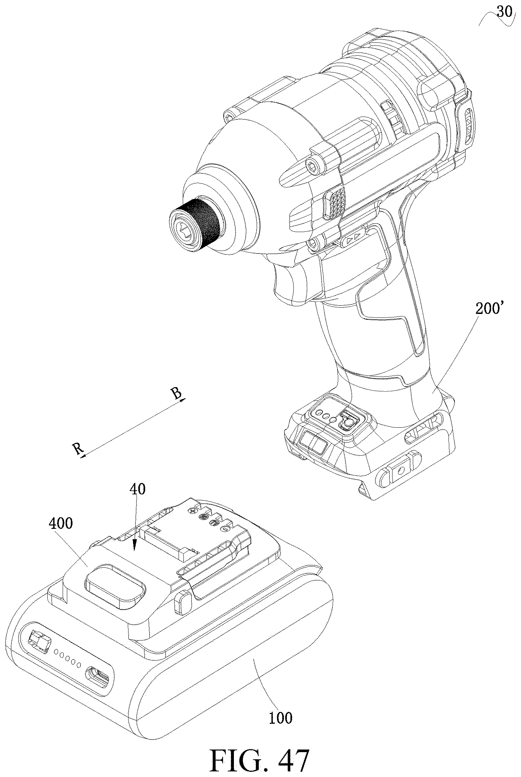

FIG. 47 is a schematic diagram of engagement time of an electrical device and a power device shown in FIG. 46.

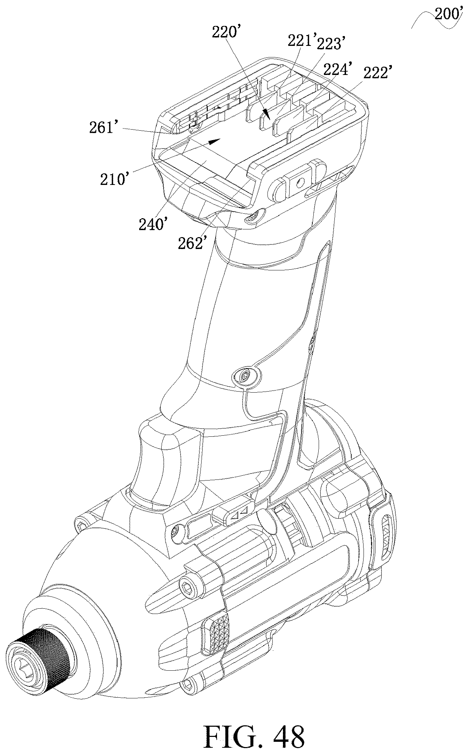

FIG. 48 is a schematic diagram of the electrical device shown in FIG. 46.

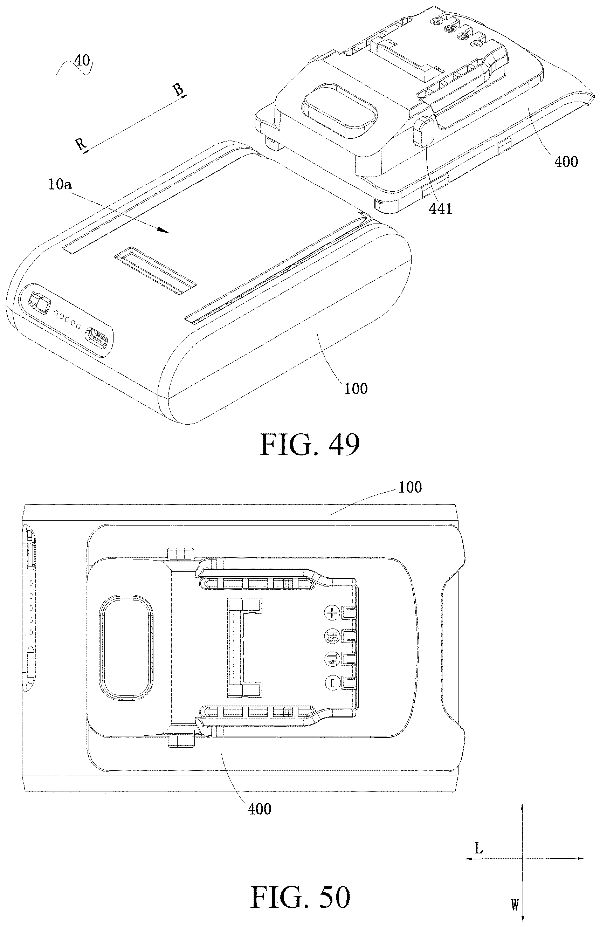

FIG. 49 is a schematic diagram of engagement time of an adapter and a battery pack shown in FIG. 46.
FIG. 50 is a top view of the power device shown in FIG. 46.

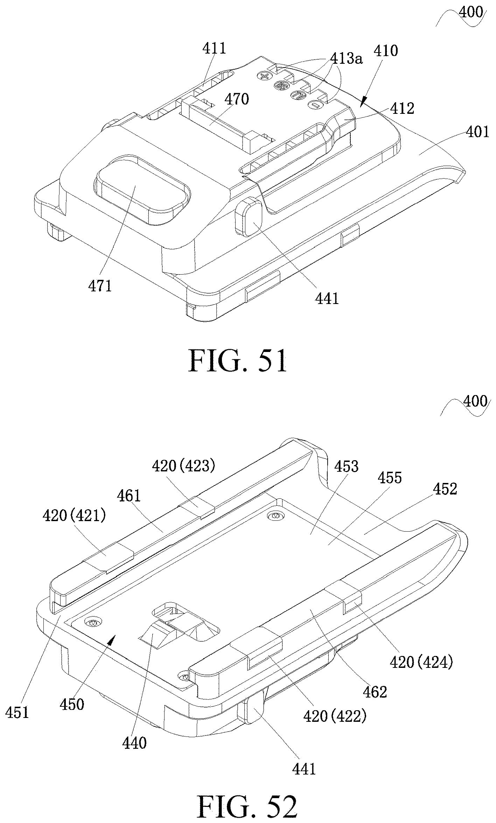

FIG. 51 and FIG. 52 are schematic diagrams of the adapter shown in FIG. 46 in different view angles.

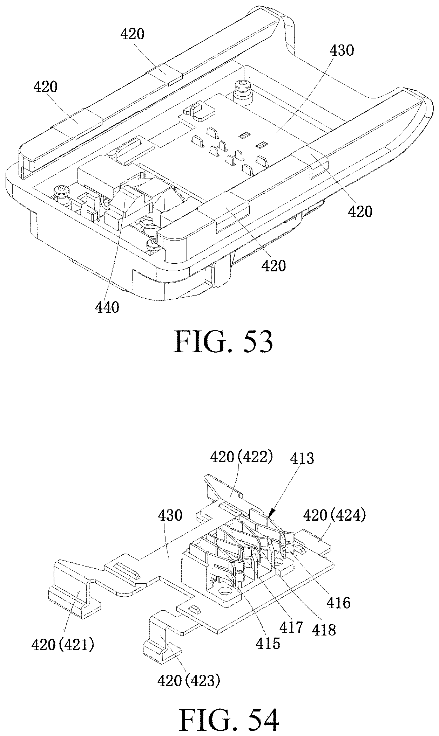

FIG. 53 is a schematic diagram of the adapter without a cover plate in FIG. 46.
FIG. 54 is a schematic solid diagram of electrical connection of a first adapter terminal and a second adapter terminal of the adapter in FIG. 46 to an adapter circuit board.

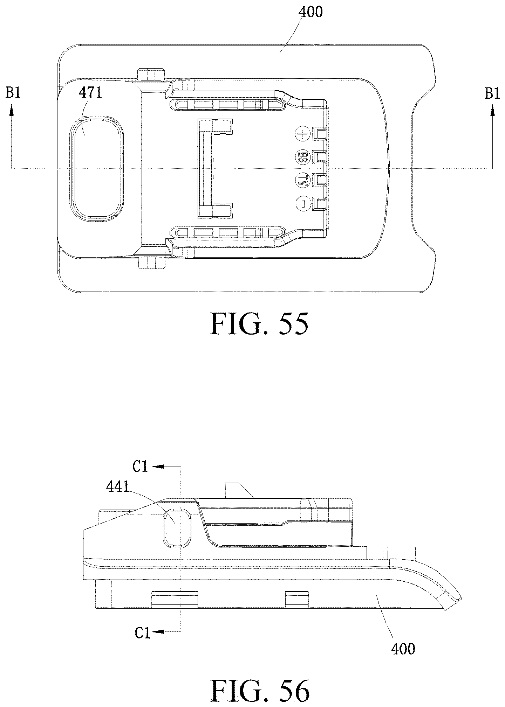

FIG. 55 is a top view of the adapter shown in FIG. 46.
FIG. 56 is a side view of the adapter shown in FIG. 46.

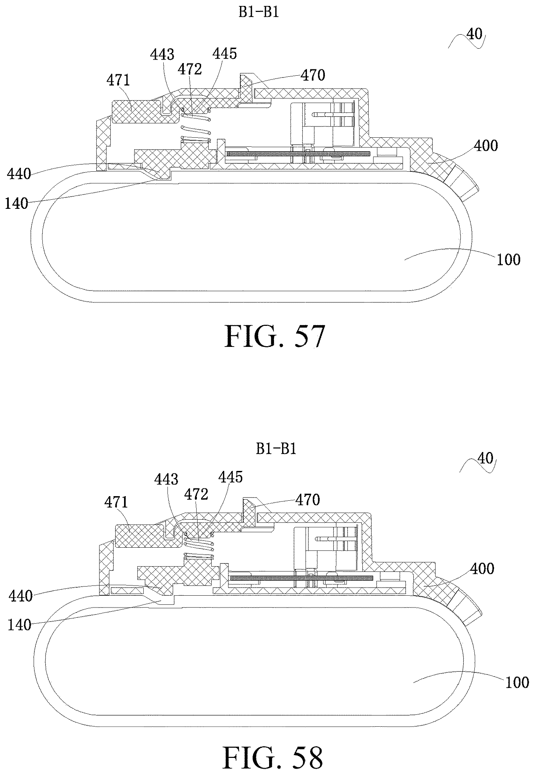

FIG. 57 is a section view in a B 1-B 1 direction in FIG. 55 when a first unlocking element of the adapter shown in FIG. 46 is not triggered.
FIG. 58 is a section view in the B1-B1 direction in FIG. 55 when the first unlocking element of the adapter shown in FIG. 46 is triggered.

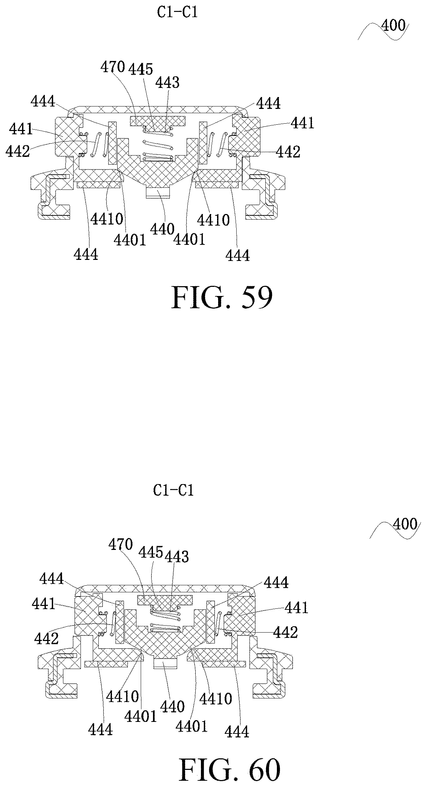

FIG. 59 is a section view in a C1-C1 direction in FIG. 56 when second unlocking elements of the adapter shown in FIG. 46 are not triggered.
FIG. 60 is a section view in the C1-C1 direction in FIG. 56 when the second unlocking elements of the adapter shown in FIG. 46 are triggered.

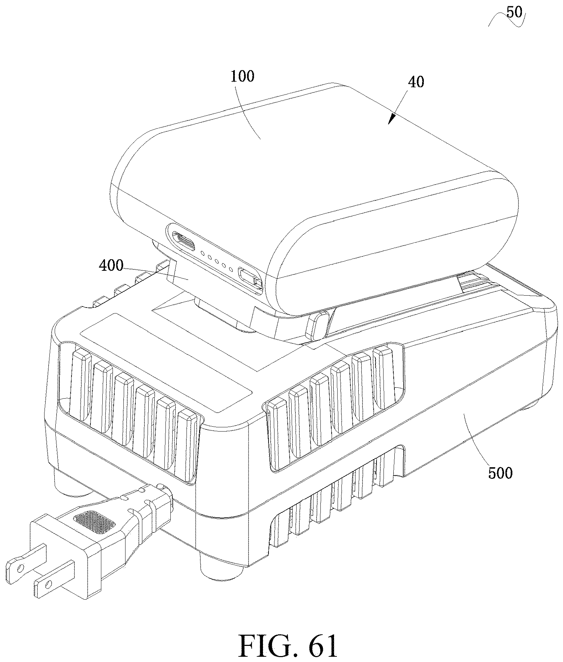

FIG. 61 is a schematic diagram of an electrical combination according to an embodiment of the present disclosure.

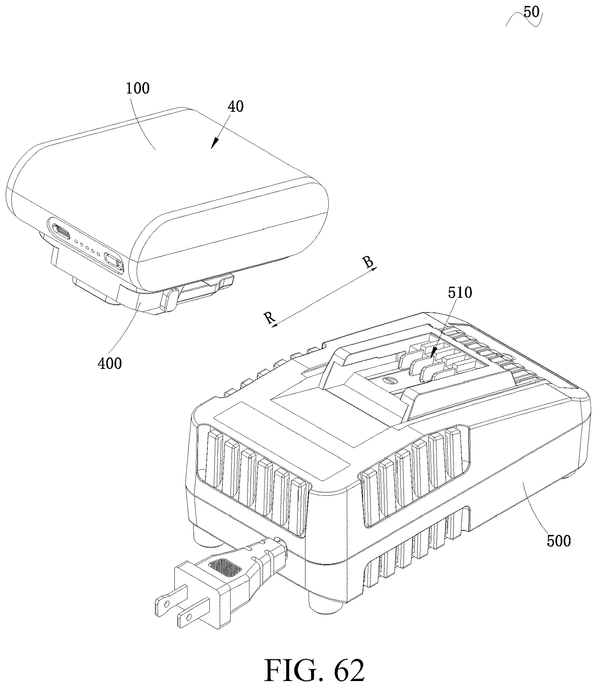

FIG. 62 is a schematic diagram of engagement time of a charger and a power device shown in FIG. 61.

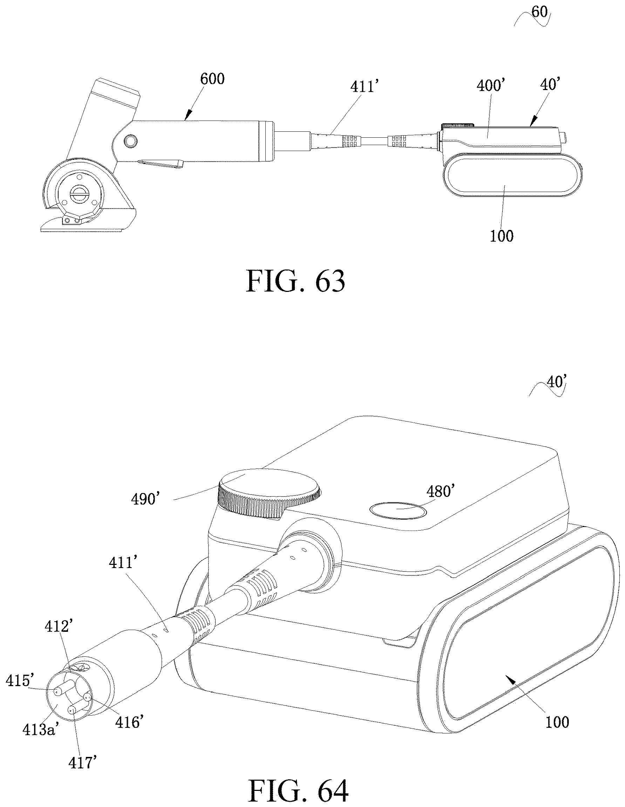

FIG. 63 is a schematic diagram of an electrical combination according to an embodiment of the present disclosure.
FIG. 64 is a schematic diagram of a power device shown in FIG. 63.

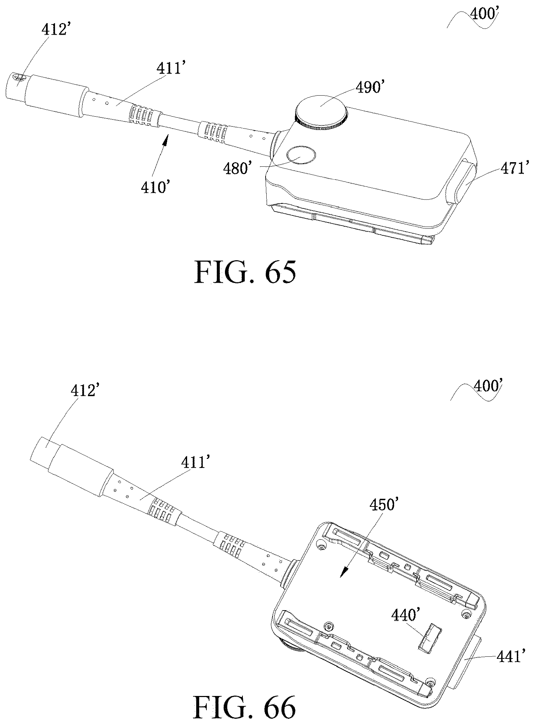

FIG. 65 and FIG. 66 are schematic diagrams of the adapter shown in FIG. 63 in different view angles.

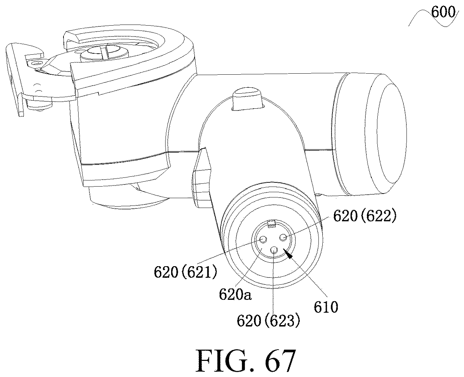

FIG. 67 is a schematic diagram of an electrical device shown in FIG. 63.

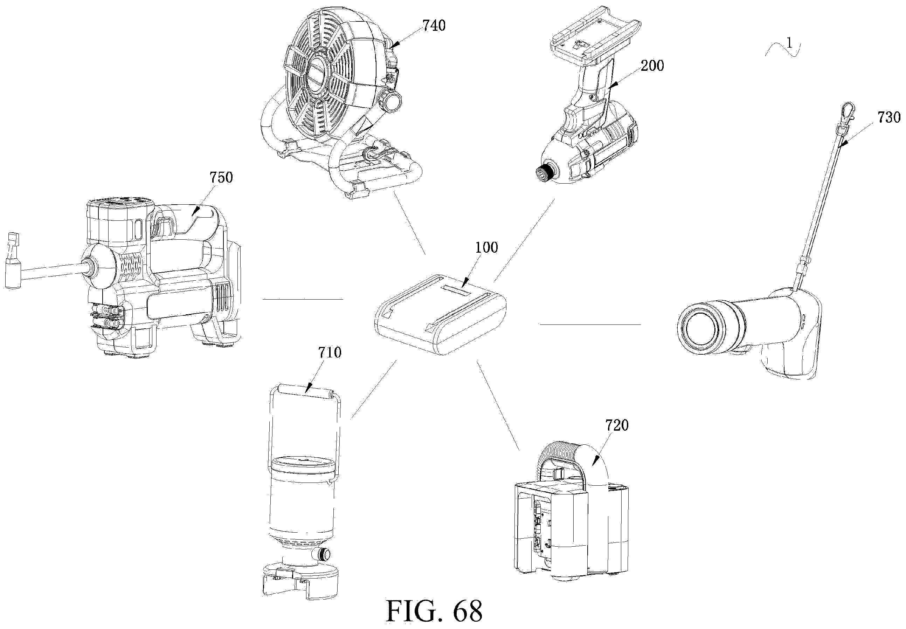

FIG. 68 is a schematic diagram of an electrical system according to an embodiment of the present disclosure.

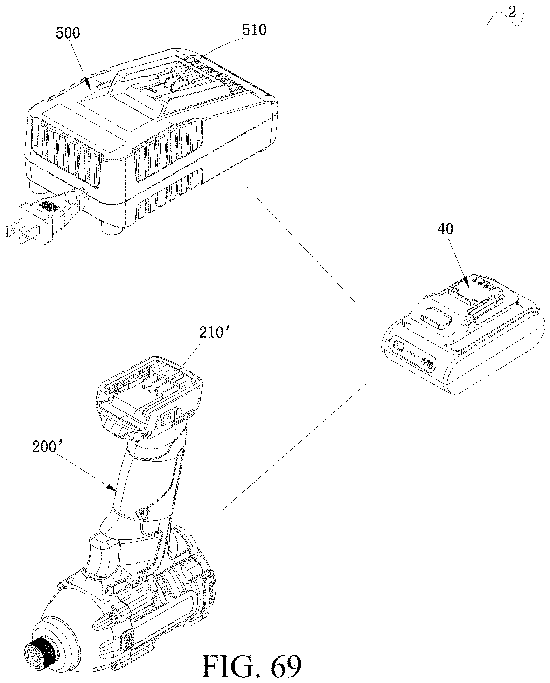

FIG. 69 is a schematic diagram of an electrical system according to an embodiment of the present disclosure.

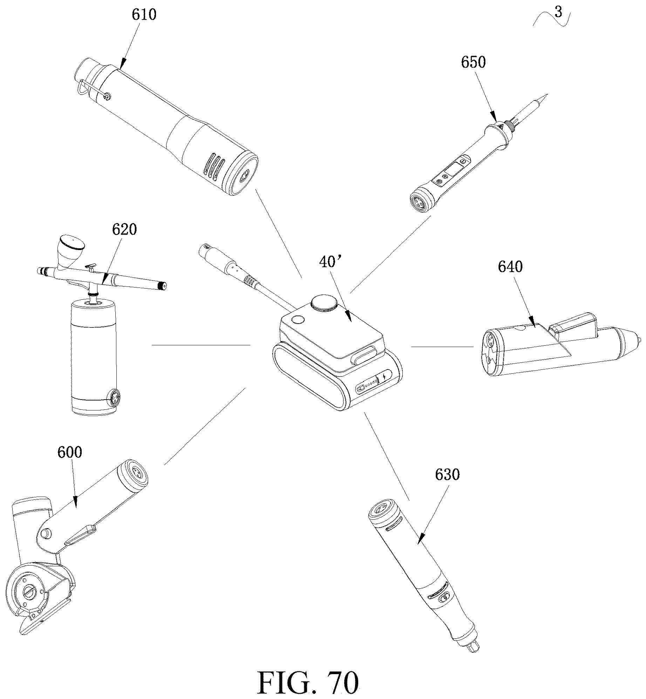

FIG. 70 is a schematic diagram of an electrical system according to an embodiment of the present disclosure.

### DETAILED DESCRIPTION

The details of the present disclosure can be more clearly understood in conjunction with the accompanying drawings and the description of specific implementations of the present disclosure. However, the specific implementations of the present disclosure described herein are for the sole purpose of explaining the present disclosure and are not to be construed in any way as a limitation of the present disclosure. Under the teachings of the present disclosure, the skilled person may conceive any possible deformations based on the present disclosure, and these should be regarded as falling within the scope of the present disclosure.

It is to be noted that: when an element is referred to as "being arranged on" another element, the element may be directly on the other element, or an intermediate element may be present. When an element is considered to be "connected to" another element, the element may be directly connected to the other element, or an intermediate element may also be present. Terms "mounted", "connected", and "connection" are to be understood in a broad sense, such as a mechanical connection or an electrical connection, or a connection within two elements, or a direct connection, or an indirect connection through an intermediate medium, and the specific meaning of the above terms may be understood by a person of ordinary skill in the art according to specific situations. The terms "vertical", "horizontal", "upper", "lower", "left", "right", and similar expressions configured herein are only for purposes of illustration, but not indicate a unique implementation.

Unless otherwise defined, meanings of all technical and scientific terms configured herein are the same as that usually understood by a person skilled in the technical field to which the present disclosure belongs. Terms configured herein are merely intended to describe the specific implementations, but are not intended to limit the present disclosure. As configured herein, the term "and/or" includes any and all combinations of one or more of the relevant listed items.

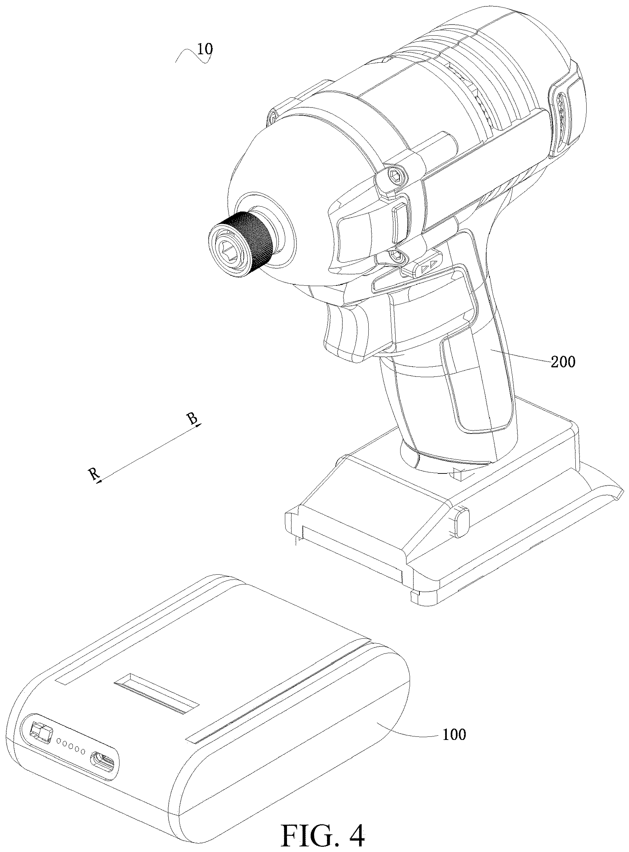

Please refer to FIG. 1 to FIG. 42, an electrical combination 10 includes a battery pack 100 and an external device 200, and the battery pack 100 may be engaged to the external device 200. The external device may be an electrical device or an adapter, and the electrical device may be an electric tool, a household appliance or a charger. The electric tool may be set as a hot glue gun, an electric drill, an angle grinder, a chain saw, a mower, etc. The household appliance may be set as a vacuum cleaner, an electric fan, a camping lantern, a handheld garment steamer, etc. Optionally, the external device 200 is set as the electric drill.

When the battery pack 100 is engaged to the external device 200, a direction of the external device 200 observed from the battery pack 100 is defined as a top direction T, a direction opposite to the top direction is defined as underneath direction U, an up-down direction is a height direction H, a lengthwise extending direction of the battery pack 100 is defined as a front-back direction L, the height direction H is perpendicular to the front-back direction L, and a direction perpendicular to the front-back direction L and the height direction H is defined as a width direction W. Optionally, the engaging direction is set as the front-back direction L. Specifically, when the battery pack 100 is engaged to the external device 200, the direction of movement of the battery pack 100 relative to the external device 200 is defined as back B, and the direction of movement of the external device 200 relative to the battery pack 100 is defined as front direction R; and when the battery pack 100 is detached from the external device 200, the direction of movement of the battery pack 100 relative to the external device 200 is defined as front direction R, and the direction of movement of the external device 200 relative to the battery pack 100 is defined as back direction B.

As shown in FIG. 6 to FIG. 9, the battery pack 100 includes a housing 110 and a cell group accommodated in the housing 110.

The housing 110 includes an upper housing 111 and a lower housing 112 which are oppositely arranged, and the upper housing 111 is in butt joint with the lower housing 112, thereby forming a chamber for accommodating the cell group. Optionally, the upper housing 111 and the lower housing 112 are connected through laser welding or ultrasonic welding, and certainly, may also be connected through fasteners, such as screw connection and pin connection.

Specifically, the cell group includes a plurality of cells 170 which are electrically connected, and may be set as a nickel-metal hydride battery, or a lithium-ion battery capable of being charged and discharged many times. There are totally five cells 170, each cell 170 is set to be cylindrical shape and extends lengthwise in the width direction W, and the five cells 170 are sequentially arranged in the front-back direction. Certainly, the number of the cells 170 may be random, such as 3, 6 and 15, the cell 170 may also be set into other shapes, such as a pouch shape, and the cells 170 may be arranged in a stack manner, which are not limited herein.

The cells 170 are electrically connected through connecting plates 171, and the connecting plates 171 are welded to a positive electrode and a negative electrode of each cell. The connecting plate 171 includes a main positive connecting plate and a main negative connecting plate (not shown) capable of outputting power of the cell group.

The cell group further includes a holder 180 for fixing the cells 170. The holder 180 includes a plurality of cylinder walls. An accommodating hole capable of at least partially accommodating one cell is formed in an inner cavity of each cylinder wall, and an outer peripheral surface of the cell 170 is coupled with the accommodating hole in a shape matched manner. Optionally, the holder 180 is made of heat conduction materials and can cover the entire outer peripheral surface of each cell 170, and thus, heat generated during work of the cells 170 can be better conducted by the holder 180, which is beneficial to heat dissipation of the cells 170.

The battery pack 100 further includes a circuit board 130. The circuit board 130 is arranged between the housing 110 and the cell group in the height direction, and extends lengthwise in the front-back direction L. Specifically, the circuit board 130 includes a substrate 131 and a plurality of components 1300 connected to the substrate 131.

The battery pack 100 further includes a battery pack interface. The battery pack interface includes a first sliding groove and a second sliding groove which extend in an engaging direction and are configured for guiding the battery pack 100 to be mechanically connected with the external device 200.

The battery pack interface includes a plurality of battery pack terminals which are electrically connected with the circuit board 130. The battery pack terminals are welded to the substrate 131 or connected to the substrate 131 through wires, and are located on two sides of the substrate 131 in the width direction W.

The battery pack terminals 120 include a battery pack positive terminal, a battery pack negative terminal and at least one battery pack signal terminal, where the battery pack positive terminal and the battery pack negative terminal are respectively electrically connected to the cell 170, the battery pack signal terminal is configured to transmit control signals of the battery pack 100, and the battery pack positive terminal, the battery pack negative terminal and the battery pack signal terminal can be electrically connected with corresponding terminals of the external device 200.

The battery pack positive terminal and the battery pack negative terminal are configured to transmit current corresponding to charge and discharge of the battery pack 100 between the battery pack 100 and the external device 200 engaged to the battery pack 100. The battery pack positive terminal is electrically connected with a positive electrode of the cell group. The battery pack negative terminal is electrically connected with a negative electrode of the cell group. The battery pack positive terminal or the battery pack negative terminal may be a terminal, or may be a plurality of electrically-connected terminals. The battery pack signal terminal is configured to transmit signals of the battery pack.

Optionally, there are four battery pack terminals 120, respectively including: one battery pack positive terminal, one battery pack negative terminal and two battery pack signal terminals. Certainly, the number of the battery pack terminals 120 may also be 2, or 3, or 5, or the like, which is not limited in this application. Optionally, one battery pack signal terminal is configured to distinguish the type and the number of the cells 170 and communicate with the external device 200, and the other battery pack signal terminal is configured to transmit signals from a thermistor and detect whether it is overcharged or overdischarged.

Correspondingly, the external device 200 is provided with an external device interface configured for being engaged to the battery pack interface. The external device interface includes a first sliding rail and a second sliding rail which extend in an engaging direction. The first sliding rail is matched with the first sliding groove, and the second sliding rail is matched with the second sliding groove to guide engaging of the external device 200 and the battery pack 100.

The external device interface further includes a plurality of external device terminals. The external device terminals include an external device positive terminal, an external device negative terminal and at least one external device signal terminal. The external device positive terminal is configured for being electrically connected with the battery pack positive terminal, the external device negative terminal is configured for being electrically connected with the battery pack negative terminal, and the external device signal terminal is configured for being electrically connected with the battery pack signal terminal.

As shown in FIG. 5, the external device 200 further includes a circuit board (not shown), and the external device terminals are electrically connected with the circuit board. Optionally, the external device interface further includes a fixing plate 230 located between the first sliding rail 161b and the second sliding rail 162b in a width direction, and the circuit board is accommodated in a space formed by an external device housing and the fixing plate 230.

The external device interface further includes an arc portion 213. When the battery pack 100 is engaged to the external device 200, the arc portion 213 is attached to a top of the housing 110 of the battery pack 100, such that engaging between the battery pack 100 and the external device 200 is more stable.

Corresponding to the battery pack terminals, there are four external device terminals arranged as well, respectively including: one external device positive terminal, one external device negative terminal and two external device signal terminals. The external device positive terminal is configured for being engaged to the battery pack positive terminal, the external device negative terminal is configured for being engaged to the battery pack negative terminal, and the external device signal terminal is configured for being engaged to the battery pack signal terminal.

The electrical combination 10 includes a first electrical interface 10a which is arranged on one of the battery pack 100 and the external device 200. The first electrical interface 10a includes a first sliding groove 161a and a second sliding groove 162a which extend in the engaging direction and are configured for guiding the battery pack 100 to be mechanically connected with the external device 200. The first electrical interface 10a further includes a plurality of first terminals 120a which are configured for being electrically connected with the corresponding terminals of the other one of the battery pack 100 and the external device 200. At least one first terminal 120a is at least partially accommodated in the first sliding groove 161a, and/or at least one first terminal 120a is at least partially accommodated in the second sliding groove 162a.

It should be noted that, "at least one first terminal 120a is at least partially accommodated in the first sliding groove 161a, and/or at least one first terminal 120a is at least partially accommodated in the second sliding groove 162a" may be understood in a way that any one or several parts or all of at least one first terminal 120 is accommodated in the first sliding groove 161a, and/or any one or several parts or all of at least one first terminal 120 is accommodated in the second sliding groove 162a.

Due to the arrangement, the battery pack 100 and the external device 200 can be electrically connected while the battery pack 100 and the external device 200 are mechanically connected. The structure is simple, the space of the sliding grooves can be reasonably utilized, and there is no need to arrange additional space to accommodate the first terminals 120a, such that the structure is compact, and the size of the battery pack can be effectively reduced, making it convenient for users to use and carry.

The electrical combination 10 further includes a second electrical interface 10b which is configured for being engaged to the first electrical interface 10a. The second electrical interface 10b further includes the first sliding rail 161b and the second sliding rail 162b which extend in the engaging direction. The first sliding rail 161b is matched with the first sliding groove 161a, and the second sliding rail 162b is matched with the second sliding groove 162a to guide engagement between the external device 200 and the battery pack 100. The second electrical interface 10b includes a plurality of second terminals 120b, and the second terminals 120b are matched with the first terminals 120a to realize electrical connection between the second electrical interface 10b and the first electrical interface 10a.

Further, the first terminals 120a include at least one first positive terminal, at least one first negative terminal and at least one first signal terminal, the first positive terminal and the first negative terminal are configured for transmitting power, and the first signal terminal is configured for transmitting control signals. Correspondingly, the second terminals 120b include at least one second positive terminal, at least one second negative terminal and at least one second signal terminal. The second positive terminal is configured for being engaged to the first positive terminal, the second negative terminal is configured for being engaged to the first negative terminal, and the second signal terminal is configured for being engaged to the first signal terminal.

Various possible arrangement manners of the first terminals 120a and the second terminals 120b are introduced below.

In some embodiments, as shown in FIG. 8, the first electrical interface 10a is arranged on the battery pack 100, and set as the battery pack interface, the first terminals 120a are set as the battery pack terminals, the first positive terminal 121a is set as the battery pack positive terminal, the first negative terminal 122a is set as the battery pack negative terminal, and the first signal terminals 123a and 124a are set as the battery pack signal terminals. Correspondingly, as shown in FIG. 5, the second electrical interface 10b is arranged on the external device 200, and set as the external device interface, the second terminals 120b are set as the external device terminals, the second positive terminal 121b is set as the external device positive terminal, the second negative terminal 122b is set as the external device negative terminal, and the second signal terminals 123b and 124b are set as the external device signal terminals.

Optionally, as shown in FIG. 8, at least part of each of the first terminals 120a is accommodated in the first sliding groove 161a and/or the second sliding groove 162a. Correspondingly, as shown in FIG. 5, the second terminals 120b are at least partially located on the first sliding rail 161b and/or the second sliding rail 162b, and projection areas, in a plane perpendicular to the engaging direction, of the second terminals 120b, the first sliding rail 161b and/or the second sliding rail 162b are at least partially overlapped.

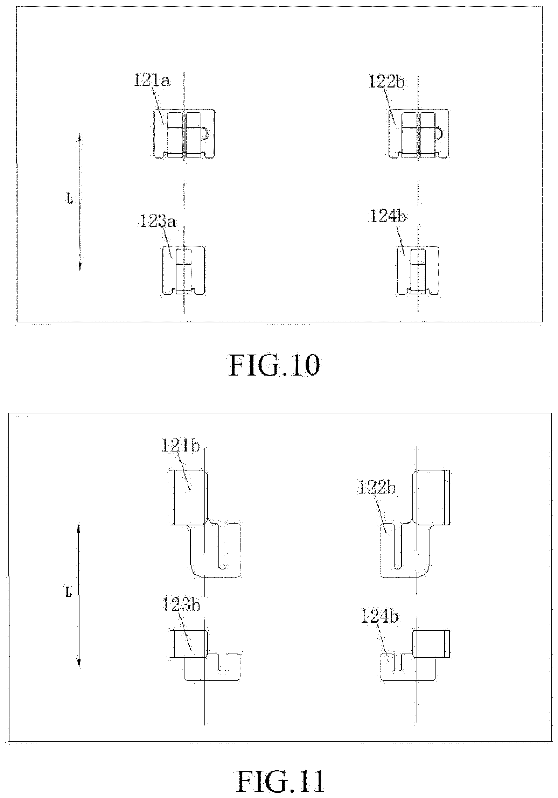

Further, as shown in FIG. 10, the first terminals 120a are arranged in two columns, and at least one column of first terminals 120a are spaced in the engaging direction. Accordingly, the first terminals 120a can occupy a smaller space of the first electrical interface 10a, and the structure is compact, which is beneficial to reduce the size of the first electrical interface 10a. It should be noted that, arranging the first terminals 120a in column may be understood in a manner that projection areas, in the plane perpendicular to the engaging direction, of the same-column first terminals 120a are at least partially overlapped.

Correspondingly, as shown in FIG. 11, the second terminals 120b are arranged in two columns, and at least one column of second terminals 120b are spaced in the engaging direction. Accordingly, the second terminals 120b can occupy a smaller space of the second electrical interface 10b, which is beneficial to reduce the size of the second electrical interface 10b, and facilitates the users to use and carry. It should be noted that, arranging the second terminals 120b in two columns may be understood in a manner that projection areas, in the plane perpendicular to the engaging direction, of the same-column second terminals 120b are at least partially overlapped.

In some embodiments, the first terminals are arranged in two columns, at least one column of first terminals is spaced in the engaging direction, and the first terminals are located between the first sliding groove and the second sliding groove. Correspondingly, the second terminals are arranged in two columns, at least one column of second terminals are spaced in the engaging direction, and the second terminals are located between the first sliding rail and the second sliding rail. Thus, the size of the battery pack and the external device can be reduced, which facilitates the users to use and carry.

Optionally, the number of first terminals 120a at least partially accommodated in the first sliding groove 161a is equal to the number of first terminals 120a at least partially accommodated in the second sliding groove 162a. As shown in FIG. 8, each of the first sliding groove 161a and the second sliding groove 162a at least partially accommodate two first terminals. Certainly, those skilled in the art can know that the number of the first terminals 120a at least partially accommodated in the first sliding groove 161a and the second sliding groove 162a is not limited, and may be 1, 3, 4, etc.

Correspondingly, the number of second terminals 120b at least partially located on the first sliding rail 161b is equal to the number of second terminals 120b at least partially located on the second sliding rail 162b, and projection areas, in the plane perpendicular to the engaging direction, of the first sliding rail 161b, the second sliding rail 162b and the same number of second terminals 120b are at least partially overlapped. As shown in FIG. 5, the two second terminals are at least partially located on the first sliding rail 161b, the two second terminals are at least partially located on the second slide 162b, and projection areas, in the plane perpendicular to the engaging direction, of the first sliding rail 161b, the second sliding rail 162b and the two second terminals are at least partially overlapped. Certainly, the second terminals may also have the same quantity, such as 1, 3 and 4, which is not limited herein.

Further, as shown in FIG. 10, the number of the first terminals 120a in each column is the same, and the two columns of first terminals 120a are spaced in the engaging direction. The number of the first terminals 120a in each column is 2. Certainly, those skilled in the art can know that the number of the first terminals 120a in each column is not limited, and may be 2, 3, 4, etc.

Correspondingly, the number of the second terminals 120b in each column is the same, and the two columns of second terminals 120b are spaced in the engaging direction. As shown in FIG. 11, the number of the second terminals 120b in each column is 2. Certainly, those skilled in the art can know that the number of the second terminals 120b in each column is not limited, and may be 2, 3, 4, etc.

In other embodiments, different numbers of first terminals may also be set to be at least partially accommodated in the first sliding groove and the second sliding groove, for example, one first terminal is at least partially accommodated in the first sliding groove, two first terminals are at least partially accommodated in the second sliding groove, and correspondingly, different numbers of second terminals are at least partially located on the first sliding rail and the second sliding rail, which is not repeated herein.

Further, the number of the first terminals in two columns is different, and at least one column of first terminals is spaced in the engaging direction. Correspondingly, the number of the second terminals in two columns is different, and at least one column of second terminals are spaced in the engaging direction

In an embodiment, as shown in FIG. 12, the first terminals only include a first positive terminal 121a', a first negative terminal 122a' and a first signal terminal 123a', wherein the first positive terminal 121a' and the first signal terminal 123a' are spaced in the engaging direction, and the first negative terminal 122a' is separately arranged. Correspondingly, as shown in FIG. 13, the second terminals only include a second positive terminal 121b', a second negative terminal 122b' and a second signal terminal 123b', wherein the second positive terminal 121b' and the second signal terminal 123b' are spaced in the engaging direction, and the second negative terminal 122b' is separately arranged.

In an embodiment, as shown in FIG. 14, the first terminals only include a first positive terminal 121a", a first negative terminal 122a" and a first signal terminal 124a", wherein the first negative terminal 122a" and the first signal terminal 124a" are spaced in the engaging direction, and the first positive terminal 121a" is separately arranged. Correspondingly, as shown in FIG. 15, the second terminals only include a second positive terminal 121b", a second negative terminal 122b" and a second signal terminal 124b", wherein the second negative terminal 122b' and the second signal terminal 124b" are spaced in the engaging direction, and the second positive terminal 121b" is separately arranged.

Optionally, as shown in FIG. 8, at least part of the first positive terminal 121a is accommodated in the first sliding groove 161a, and at least part of the first negative terminal 122a is accommodated in the second sliding groove 162a. The first positive terminal 121a and the first negative terminal 122a are separately arranged in the first sliding groove 161a and the second sliding groove 162a, which is beneficial to realize electrical connection of the battery pack 100 and the external device 200. Certainly, in other embodiments, it may also be set as below: at least part of each of the first positive terminal and the first negative terminal is accommodated in the first sliding groove or the second sliding groove, which is not limited in the present disclosure.

Correspondingly, as shown in FIG. 5, at least part of the second positive terminal 121b is located on the first sliding rail 161b, and/or at least part of the second negative terminal 122b is located on the second sliding rail 162b, projection areas, in the plane perpendicular to the engaging direction, of the second positive terminal 121b and the first sliding rail 161b are at least partially overlapped, and/or projection areas, in the plane perpendicular to the engaging direction, of the second negative terminal 121b and the second sliding rail 162b are at least partially overlapped. The second positive terminal 121b and the second negative terminal 122b are separately arranged in the first sliding rail 161b and the second sliding rail 162b, which is beneficial to realize electrical connection of the battery pack 100 and the external device 200. Certainly, in other embodiments, it may also be set as below: projection areas, in the plane perpendicular to the engaging direction, of the second positive terminal, the second negative terminal and the first sliding rail are at least partially overlapped, and projection areas, in the plane perpendicular to the engaging direction, of the second signal terminal and the second sliding rail are at least partially overlapped, which is not limited in the present disclosure.

Further, as shown in FIG. 10, the first positive terminal 121a is located in one column, and the first negative terminal 122a is located in the other column. The first positive terminal 121a and the first negative terminal 122a are separately arranged in two columns, which is beneficial to realize electrical connection of the battery pack and the external device.

Similar to the arrangement manner of the first terminals 120a, the second positive terminal 121b is located in one of columns, and the second negative terminal 122b is located in the other column. As shown in FIG. 11, the second positive terminal 121b and the second negative terminal 122b are respectively located in one column. The second positive terminal 121b and the second negative terminal 122b are separately arranged in two columns, which is beneficial to realize electrical connection of the battery pack 100 and the external device 200.

Certainly, the first positive terminal and the first negative terminal may also be arranged in the same column. As shown in FIG. 16, a first positive terminal 1210a and a first negative terminal 1220a are spaced in the engaging direction, and a first signal terminal 1230a and a first signal terminal 1240a are spaced in the engaging direction. Correspondingly, the second positive terminal and the second negative terminal are located in the same column. As shown in FIG. 17, a second positive terminal 1210b and a second negative terminal 1220b are spaced in the engaging direction, and a second signal terminal 1230b and a second signal terminal 1240b are spaced in the engaging g direction.

Optionally, the first terminals 120a at least partially accommodated in the first sliding groove 161a include the first positive terminal and at least one first signal terminal, and/or the first terminals 120a at least partially accommodated in the second sliding groove 162a include the first negative terminal and at least one first signal terminal. As shown in FIG. 8, the first terminals 120a at least partially accommodated in the first sliding groove 161a include the first positive terminal 121a and a first signal terminal 123a, and/or the first terminals 120a at least partially accommodated in the second sliding groove 162a include the first negative terminal 122a and a first signal terminal 124a.

Correspondingly, the second positive terminal and at least one second signal terminal are at least partially located on the first sliding rail, and/or the second negative terminal and at least one second signal terminal are at least partially located on the second sliding rail, projection areas, in the plane perpendicular to the engaging direction, of the second positive terminal, the at least one second signal terminal and the first sliding rail are at least partially overlapped, and/or projection areas, in the plane perpendicular to the engaging direction, of the second negative terminal, the at least one second signal terminal and the second sliding rail are at least partially overlapped As shown in FIG. 5, the second positive terminal 121b and the second signal terminal 123b are both at least partially located on the first sliding rail 161b, the second negative terminal 122b and a second signal terminal 124b are both at least partially located on the second sliding rail 162b, projection areas, in the plane perpendicular to the engaging direction, of the second positive terminal 121b, the second signal terminal 123b and the first sliding rail 161b are at least partially overlapped, and projection areas, in the plane perpendicular to the engaging direction, of the second negative terminal 122b, the second signal terminal 124b and the second sliding rail 162b are at least partially overlapped.

Further, the first positive terminal and the at least one first signal terminal are spaced in the engaging direction, and/or the first negative terminal and the at least one first signal terminal are spaced in the engaging direction. Correspondingly, the second positive terminal and the at least one second signal terminal are spaced in the engaging direction, and/or the second negative terminal and the at least one second signal terminal are spaced in the engaging direction.

As shown in FIG. 8 and FIG. 10, the first positive terminal 121a and the first signal terminal 123a are arranged in column, the first negative terminal 122a and the first signal terminal 124a are arranged in column, in other words, projection areas, in the plane perpendicular to the engaging direction, of the first positive terminal 121a and the first signal terminal 123a are at least partially overlapped, projection areas, in the plane perpendicular to the engaging direction, of the first negative terminal 122a and the first signal terminal 124a are at least partially overlapped, meanwhile, the projection area, in the plane perpendicular to the engaging direction, of the first signal terminal 123a does not exceed the projection area, in the plane perpendicular to the engaging direction, of the first positive terminal 121a, and the projection area, in the plane perpendicular to the engaging direction, of the first signal terminal 124a does not exceed the projection area, in the plane perpendicular to the engaging direction, of the first negative terminal 121a. Optionally, a center line of the first positive terminal 121a and a center line of the first signal terminal 123a coincide and are both parallel to the engaging direction, and a center line of the first negative terminal 122a and a center line of the first signal terminal 124a coincide and are both parallel to the engaging direction. Due to the arrangement, the space occupied by the arrangement of the first terminals 120a can be saved to the maximum degree, thereby effectively reducing the size of the first electrical interface 10a.

Correspondingly, as shown in FIG. 5 and FIG. 11, the second positive terminal 121b and the second signal terminal 123b are arranged in column, the second negative terminal 122b and the second signal terminal 124b are arranged in column, in other words, projection areas, in the plane perpendicular to the engaging direction, of the second positive terminal 121b and the second signal terminal 123b are at least partially overlapped, projection areas, in the plane perpendicular to the engaging direction, of the second negative terminal 122b and the second signal terminal 124b are at least partially overlapped, meanwhile, the projection area, in the plane perpendicular to the engaging direction, of the second signal terminal 123b does not exceed the projection area, in the plane perpendicular to the engaging direction, of the second positive terminal 121a, and the projection area, in the plane perpendicular to the engaging direction, of the second signal terminal 124b does not exceed the projection area, in the plane perpendicular to the engaging direction, of the second negative terminal 121b. Optionally, a center line of the second positive terminal 121b and a center line of the second signal terminal 123b coincide and are both parallel to the engaging direction, and a center line of the second negative terminal 122b and a center line of the second signal terminal 124b coincide and are both parallel to the engaging direction. Due to the arrangement, the space occupied by the arrangement of the second terminals 120b can be saved to the maximum degree, thereby effectively reducing the size of the second electrical interface 10b.

In other embodiments, as shown in FIG. 18, a first positive terminal 1211a and a first signal terminal 1231a are arranged in column, a first negative terminal 1221a and a first signal terminal 1241a are arranged in column, projection areas, in the plane perpendicular to the engaging direction, of the first positive terminal 1211a and the first signal terminal 1231a are only partially overlapped, projection areas, in the plane perpendicular to the engaging direction, of the first negative terminal 1221a and the first signal terminal 1241a are only partially overlapped, meanwhile, a center line of the first positive terminal 1211a is staggered from a center line of the first signal terminal 1231a in the width direction W, and a center line of the first negative terminal 1221a is staggered from a center line of the first signal terminal 1241a in the width direction W. Thus, the space occupied by the first terminals in the width direction of the first electrical interface can be reduced, so as to reduce the size of the first electrical interface.

Correspondingly, as shown in FIG. 19, a second positive terminal 1211b and a second signal terminal 1231b are arranged in column, a second negative terminal 1221b and a second signal terminal 1241b are arranged in column, projection areas, in the plane perpendicular to the engaging direction, of the second positive terminal 1211b and the second signal terminal 1231b are only partially overlapped, projection areas, in the plane perpendicular to the engaging direction, of the second negative terminal 1221b and the second signal terminal 1241b are only partially overlapped, meanwhile, a center line of the second positive terminal 1211b is staggered from a center line of the second signal terminal 1231b in the width direction W, and a center line of the second negative terminal 1221b is staggered from a center line of the second signal terminal 1241b in the width direction W. Thus, the space occupied by the second terminals in the width direction of the second electrical interface can be reduced, so as to reduce the size of the second electrical interface.

Further, as shown in FIG. 8, the first electrical interface 10a is provided with an initial end 101a and a tail end 102a which are opposite in the engaging direction. When the battery pack 100 is engaged to the external device 200, the initial end 101a makes contact with the external device 200 earlier than the tail end 102a. The first signal terminals 123a and 124a are closer to the initial end 101a relative to the first positive terminal 121a or the first negative terminal 122a.

Correspondingly, as shown in FIG. 5, the second electrical interface 10b includes a first end 101b and a second end 102b which are opposite in the engaging e direction. When the external device 200 is engaged to the battery pack 100, the first end 101b makes contact with the battery pack 100 earlier than the second end 1b. The second positive terminal 121b and the second negative terminal 122b are closer to the first end 101b relative to the second signal terminals 123b and 124b. Due to the arrangement, when the battery pack 100 is engaged to the external device 200, the second positive terminal or the second negative terminal first makes contact with the first signal terminal instead of being electrically connected with the first positive terminal or the first negative terminal for power transmission, thereby preventing problems such as terminal damage due to too large current.

Further, please refer to FIG. 8, FIG. 20 and FIG. 21, the first sliding groove 161a and the second sliding groove 162a both include a side wall 1601a and a side wall 1602a in a pair which extend in the engaging direction and are oppositely arranged, and a bottom wall 1603a arranged between the side walls 1601a and 1602a in each pair. Correspondingly, as shown in FIG. 5 and FIG. 22, the first sliding rail 161b and the second sliding rail 162b both include side edges 1601b and 1602b which are respectively configured for being engaged to the side walls 1601a and 1602a, and a bottom edge 1603b configured for being engaged to the bottom wall 1603a.

Optionally, at least one first terminal is at least partially exposed from an opening formed in the side wall 1601a or the side wall 1602a or the bottom wall 1603a. Those skilled in the art easily conceive that the first terminals may be at least partially exposed from openings formed any one or more of the side wall 1601a, the side wall 1602a and the bottom wall 1603a. Correspondingly, at least one second terminal is located on the side edge 1601b or the side edge 1602b or the bottom edge 1603b. Those skilled in the art easily conceive that the second terminals may be at least partially located on any one or more of the side edge 1601b, the side edge 1602b and the bottom edge 1603b. Optionally, at least one second terminal is at least partially integrated with the first sliding rail 161b to be formed, and/or at least part of at least one second terminal and the second sliding rail 162b are integrally formed. It needs to be explained that "integrated forming" may be understood as two components being integrated through manners such as secondary injection molding.

In an embodiment, as shown in FIG. 8, the first terminals 120a are at least partially exposed from the openings formed in the bottom walls 1603a, and correspondingly, as shown in FIG. 5, the second terminals 120b are at least partially exposed from the openings formed in the bottom edges 1603b.

In an embodiment, as shown in FIG. 20, first terminals 1200a are at least partially exposed from the openings formed in the bottom walls 1601a, and correspondingly, second terminals are at least partially located on the side edges 1601b (not shown in the figure).

In an embodiment, as shown in FIG. 21, first terminals 1201a are at least partially exposed from openings formed in side walls 1602, and correspondingly, as shown in FIG. 22, second terminals 1201b are at least partially located on the side edges 1602b.

In other embodiments, it may also be set as below: a plurality of first terminals are at least partially exposed from the openings formed in the side walls 1601a, and/or the plurality of first terminals are at least partially exposed from the openings formed in the side walls 1602a, and/or the plurality of first terminals are at least partially exposed from the openings formed in the bottom walls 1603a; and correspondingly, a plurality of second terminals are at least partially located on the side edges 1601b, and/or the plurality of second terminals are at least partially located on the side edges 1602b, and/or the plurality of second terminals are at least partially located on the bottom edges 1603b. The first terminals and the second terminals may be distributed in several forms, which is not limited in the present disclosure.

In some embodiments, at least one first terminal is at least partially arranged on the side wall 1601a and/or the side wall 1602a and/or the bottom wall 1603a. Optionally, at least one first terminal is at least partially integrated with the first sliding groove 161a to be formed, and/or at least part of at least one first terminal and the second sliding groove 162a are integrally formed. It needs to be explained that "integrated forming" may be understood as two components being integrated through manners such as secondary injection molding. Correspondingly, at least one second terminal is at least partially exposed from the opening/openings formed in side edge 1601b and/or the side edge 1602b and/or the bottom edge 1603b.

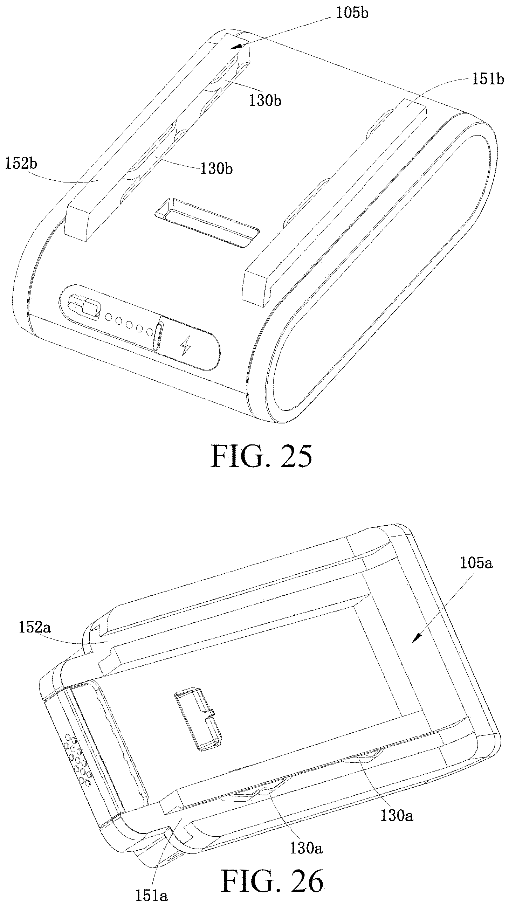

In some embodiments, as shown in FIG. 25 to FIG. 28, the first electrical interface is arranged on the external device, and the second electrical interface is arranged on the battery pack. The first electrical interface is set as the external device interface, and the second electrical interface is set as the battery pack interface.

As shown in FIG. 25, the second electrical interface 105b includes a first sliding rail 151b and a second sliding rail 152b which extend in the engaging direction. The second electrical interface 105b further includes a plurality of second terminals 130b, projection areas, in the plane perpendicular to the engaging direction, of at least one second terminal 130b and the first sliding rail 151b are at least partially overlapped, and/or projection areas, in the plane perpendicular to the engaging direction, of at least one second terminal 130b and the second sliding rail 152b are at least partially overlapped, and the arrangement manner of the second terminals 130b may be referred to the second terminals in the foregoing parts, which is not repeated herein.

Correspondingly, the first electrical interface 105a includes a first sliding groove 151a and a second sliding groove 152a which extend in the engaging direction. The first electrical interface 105a further includes a plurality of first terminals 130a, the first terminals 130a are at least partially accommodated in the first sliding groove 151a, and/or at least one first terminal 130a is at least partially accommodated in the second sliding groove 152a, and the arrangement manner of the first terminals 130a may be referred to the first terminals in the foregoing parts, which is not repeated herein.

Various possible structural forms of the first terminals 120a and the second terminals 120b are introduced below.

One of the first terminal 120a and the second terminal 120b is provided with a contact portion making elastic contact with the other one, and the other one of the first terminal 120a and the second terminal 120b is provided with an engaging portion matched with the contact portion. Optionally, the contact portion makes contact with the engaging portion only on one side of the engaging direction. If the contact portion is set to make contact with the other one on the two sides of the engaging direction, two sides, in the engaging direction, of the circuit board are both required to be wired, which makes wiring complex. Due to the above arrangement, internal structures of the battery pack and the external device can be simplified, such that the battery pack and the external device are compact in structure and small in size, making it convenient for the users to use and carry.

Optionally, the first terminal 120a and the second terminal 120b are both made of metal, such as copper or a copper alloy.

Optionally, when the contact portion is matched with the engaging portion, the positive pressure exerted on the contact portion ranges from 1 to 100 N, such that the first terminal 120a and the second terminal 120b are in stable contact, thereby preventing failures in engaging between the battery pack 100 and the external device 200. Optionally, the positive pressure exerted on the contact portion is 28 N.

Further, when the contact portion is matched with the engaging portion, the amount of elastic deformation of the contact portion ranges from 0 to 1.5 mm. Optionally, the amount of elastic deformation of the contact portion is 1 mm. In an embodiment, as shown in FIG. 8, a contact portion 1204a is at least partially exposed from the opening formed in the bottom wall 1603a. The amount of elastic deformation of the contact portion 1204a may be understood as a maximum distance between the contact portion 1204a and the bottom wall 1603a in the height direction H. In an embodiment, as shown in FIG. 20, the contact portion 1205a is at least partially exposed from the opening formed in the side wall 1601a, and the amount of elastic deformation of the contact portion 1205a may be understood as a maximum distance between the contact portion 1205a and the side wall 1601a in the width direction W.

Further, the elasticity modulus of the contact portion range from 100,000 to 150,000 MPa, which guarantees that the contact portion has enough elasticity meeting engaging requirements. Optionally, the elasticity modulus of the contact portion is 125,000 MPa.

In some embodiments, the first terminal 120a includes the contact portion, and the second terminal 120b includes the engaging portion. As shown in FIG. 8, the contact portion 1204a of at least one first terminal 120a is at least partially accommodated in the first sliding groove 161a, and/or the contact portion 1204a of at least one first terminal 120a is at least partially accommodated in the second sliding groove 162a. Correspondingly, as shown in FIG. 5, an engaging portion 1204b of at least one second terminal 120b is at least partially located on the first sliding rail 161b, and the engaging portion 1204b of at least one second terminal 120b is at least partially located on second sliding rail 162b.

Further, projection areas, in the plane perpendicular to the engaging direction, of the contact portions 1204a of the same-column first terminals 120a are at least partially overlapped. Correspondingly, projection areas, in the plane perpendicular to the engaging direction, of the engaging portions 1204b of the same-column second terminals 120b are at least partially overlapped.

In some embodiments, the second terminal includes the contact portion, and the first terminal includes the engaging portion. As shown in FIG. 23, the engaging portion 1205a of at least one first terminal 1202a is at least partially located on the first sliding groove 1610a, and/or the engaging portion 1205a of at least one first terminal 1202a is at least partially located on the second sliding groove 1611a. Correspondingly, as shown in FIG. 24, the contact portion 1205b of at least one second terminal 1202b is at least partially exposed from an opening formed in the first sliding rail 1610b, and/or the contact portion 1205b of at least one second terminal 1202b is at least partially exposed from an opening formed in the second sliding rail 1611b.

Optionally, as shown in FIG. 29, the contact portion 1204a is set to be arc shape. The first terminal 120a further includes a pin portion 1206a, one end of the pin portion 1206a is positioned on the substrate 131, and the other end of the pin portion 1206a extends to the contact portion 1204a. Correspondingly, as shown in FIG. 30, the engaging portion 1204b is set to be in a flat plate shape. The second terminal 120b further includes a connecting portion 1206b, one end of the connecting portion 1206b is positioned on the circuit board of the external device, and the other end of the connecting portion 1206b extends to the engaging portion 1204b.

In other embodiments, as shown in FIG. 31, a contact portion 1204a' is set as a pair of clamping plates extending in the engaging direction, and as shown in FIG. 32, an engaging portion 1204b' is set to be in a flat plate shape.

Regardless of the forms of the first terminal and the second terminal, the structure of the first signal terminal is basically consistent to the structure of the first positive terminal or the first negative terminal, and the structure of the second signal terminal is also basically consistent to the structure of the second positive terminal or the second negative terminal. The only difference is that the size and thickness of the first positive terminal and the first negative terminal are greater than those of the first signal terminal, and the size and thickness of the second positive terminal and the second negative terminal are greater than those of the second signal terminal. The large size and thickness of the first positive terminal and the first negative terminal, and the large size and thickness of the second positive terminal and the second negative terminal result in a large contact area between the first positive terminal and the second positive terminal and between the first negative terminal and the second negative terminal, which can restrain an increase in contact resistance, prevent heat generated due to the increased contact resistance, and avoid terminal damage and fusing. Almost no current flows between the first signal terminal and the second signal terminal, and even if the contact area between the first signal terminal and the second signal terminal is small, high heat cannot be generated in the first signal terminal and the second signal terminal.

It needs to be explained that various possible arrangement manners and various possible structural forms of the first terminals and the second terminals may be combined at random, which is not be repeated herein.

A process of engaging of the battery pack 100 and the external device 200 is introduced below. Taking the first electrical interface 10a being arranged on the battery pack 100 and the second electrical interface 10b being arranged on the external device 200 as an example, the first terminal 120a is set as the battery pack terminal, and the second terminal 120b is set as the external device terminal.

When the battery pack 100 is engaged to the external device 200, as the external device 200 moves ahead in the engaging direction, the external device positive terminal 121b first passes through the battery pack signal terminal 123a, the external device negative terminal 122b first passes through the battery pack signal terminal 124a, then, the external device positive terminal 121b leaves the battery pack signal terminal 123a till being electrically connected with the battery pack positive terminal 121a, the external device negative terminal 122b leaves the battery pack signal terminal 124a till being electrically connected with the battery pack negative terminal 122a, meanwhile, the external device signal terminal 123b is electrically connected with the battery pack signal terminal 123a, and the external device signal terminal 124b is electrically connected with the battery pack signal terminal 124a. It is worth mentioning that the battery pack positive terminal 121a and the battery pack signal terminal 123a cannot be electrically connected with the external device positive terminal 121b at the same time, the battery pack negative terminal 122a and the first signal terminal 124a cannot be electrically connected with the external device negative terminal 122b at the same time, and otherwise, a short circuit is likely to be caused in a circuit, which may result in fire and other safety issues.

In an embodiment, as shown in FIG. 33 to FIG. 35, in the engaging direction, the size of the external device positive terminal 121b is less than the shortest distance between the battery pack positive terminal 121a and the battery pack signal terminal 123a, and the size of the external device negative terminal 122b is less than the shortest distance between the battery pack negative terminal 122a and the battery pack signal terminal 124a. Taking engagement between the battery pack positive terminal 121a and the external device positive terminal 121b and engagement between the battery pack signal terminal 123a and the external device signal terminal 123b as an example, in the engaging direction, the shortest distance S1 between the battery pack positive terminal 121a and the battery pack signal terminal 123a is a distance from the end, close to the battery pack signal terminal 123a, of the battery pack positive terminal 121a to the end, close to the battery pack positive terminal 121a, of the battery pack signal terminal 123a, and the shortest distance S1 between the battery pack positive terminal 121a and the battery pack signal terminal 123a is greater than the size S2 of the external device positive terminal 121b in the engaging direction. Because S1>S2, the external device positive terminal 121b cannot be engaged to the battery pack positive terminal 121a and the battery pack signal terminal 123a at the same time.

In an embodiment, as shown in FIG. 36 to FIG. 38, in the height direction H, a battery pack positive terminal 1212a and a battery pack signal terminal 1232a located in the same column are staggered from each other, a battery pack negative terminal 1222a and a battery pack signal terminal 1242a located in the same column are staggered from each other, and correspondingly, an external device positive terminal 1212b and an external device signal terminal 1232b located in the same column are staggered from each other. In other words, electrical contacts of the battery pack positive terminal 1212a and the battery pack signal terminal 1232a located in the same column are not located at the same height, and electrical contacts of the battery pack negative terminal 1222a and the battery pack signal terminal 1242a located in the same column are not located at the same height. The electrical contact point of the battery pack terminal 120a refers to a highest contact point in all contacts points of the battery pack terminal 120a making contact with the external device terminal 120b in the height direction H when the battery pack 100 is engaged to the external device 200; and the electrical contact point of the external device terminal 120b refers to a highest contact point in all contact points of the external device terminal 120b making contact with the battery pack terminal 120a in the height direction H when the battery pack 100 is engaged to the external device 200.

Optionally, in order to avoid interference, in the height direction H, the electrical contact point of the battery pack signal terminal 1232a is lower than that of the battery pack positive terminal 1212a, and the electrical contact point of the external device signal terminal 1232b is lower than that of the external device positive terminal 1212b. In other words, when a bottom surface of the battery pack is taken as a reference point, a distance D1 between the electrical contact point of the battery pack signal terminal 1232a and the bottom surface of the battery pack is less than a distance D2 between the electrical contact point of the battery pack positive terminal 1221a and the bottom surface of the battery pack, and a distance between the electrical contact point of the external device signal terminal 1232b and the bottom surface of the battery pack is less than a distance between the electrical contact point of the external device positive terminal 1212b and the bottom surface of the battery pack. Accordingly, in the process of engagement, the external device positive terminal 1212b avoids the battery pack signal terminal 1232a, and is engaged to the battery pack positive terminal 1212a only at the corresponding height.

In an embodiment, as shown in FIG. 39, in the width direction W, a battery pack positive terminal 1213a and a battery pack signal terminal 1233a located in the same column are staggered from each other, and a battery pack negative terminal 1223a and a battery pack signal terminal 1243a located in the same column are staggered from each other. Correspondingly, in the width direction W, the external device positive terminal and the external device signal terminal located in the same column are staggered from each other, and the external device negative terminal and the external device signal terminal located in the same column are staggered from each other (not shown in the figure).

Optionally, in order to avoid interference, when the battery pack terminal is engaged to the external device terminal, in the width direction W, an electrical contact point of the battery pack positive terminal 1213a is closer to the external device positive terminal 1213b relative to an electrical contact point of the battery pack signal terminal 1233a, and an electrical contact point of the battery pack negative terminal 1223a is closer to the external device negative terminal 1223b relative to the battery pack signal terminal 1243a.

In other embodiments, this problem may also be avoided by arranging a control circuit, such that the battery pack positive terminal and the battery pack signal terminal cannot be electrically connected with the external device positive terminal at the same time, and the battery pack negative terminal and the battery pack signal terminal cannot be electrically connected with the external device negative terminal at the same time.

The battery pack 100 further includes a locking portion 140, which is configured for locking the battery pack 100 and the external device. Optionally, the locking portion 140 is set as a groove, and as shown in FIG. 6, the locking portion 140 is located between the first sliding groove 161a and the second sliding groove 162a in the width direction W. In other embodiments, the locking portion 140 may also be partially accommodated in the first sliding groove 161a and the second sliding groove 162a; and optionally, there are two locking portions 140, and the first sliding groove 161a and the second sliding groove 162a both at least partially accommodate one locking portion 140. Certainly, those skilled in the art easily conceive that the locking portion may also be set as a protrusion.

Please refer to FIG. 40 to FIG. 42, the external device 200 further includes a locking and releasing apparatus which is configured for locking and unlocking the external device 200 and the battery pack 100. The locking and releasing apparatus includes a locking element 240 capable of moving between a locking position and an unlocking position, and an unlocking element 241 for driving the locking element 240 to move. When the locking element 240 is located at the locking position, the locking element 240 is matched with the locking portion 140, such that the external device 200 and the battery pack 100 are locked; and when the locking element 240 is located at the unlocking position, the locking element 240 is not matched with the locking portion 140, such that the external device 200 and the battery pack 100 are unlocked

The locking element 240 is set as a protrusion protruding out of an outer surface of the fixing plate 230, and by arranging the locking element 240 and the unlocking element 241 on the external device 200, the structure of the battery pack 100 is simple, the size of the battery pack 100 can be effectively reduced, and as a result, the user can conveniently use and carry the battery pack. Optionally, the outer surface of the fixing plate 230 is not provided with other protrusions except for the locking element 240, and the locking portion 140 of the battery pack 100 is set as a concave portion, which can prevent the fixing plate 230 from interfering with the top of the housing 110 of the battery pack 100.

Further, the locking and releasing apparatus further includes first elastic portions 242 configured for resetting the unlocking element 241, second elastic portions 243 configured for resetting the unlocking portions 241, and supporting portions 244 arranged between the first elastic portions 242 and the locking portion 240. One end of the first elastic portion 242 is in cup joint to the unlocking portion 241, and the other end abuts against the supporting portion 244. The side, towards the second elastic portion 543, of the housing of the external device is provided with a protruding portion 203. One end of the second elastic portion 243 is in cup joint to the protruding portion 203, and the other end abuts against the locking portion 240. The end, close to the locking portion 240, of the unlocking portion 241 is provided with a first abutting portion 2410, and the end, close to the unlocking portion 241, of the locking portion 240 is provided with a second abutting portion 2401. When the unlocking portions 241 are not triggered, as shown in FIG. 41, the first elastic portions 242 and the second elastic portions 243 are all in a loose state, and the first abutting portions 2410 abut against the second abutting portions 2401. When the unlocking portions 241 are triggered, as shown in FIG. 42, the first elastic portions 242 are compressed, the unlocking portions 241 drive the first abutting portions 2410 to move in the direction of the second abutting portions 2401, and the locking portion 240 are extruded by the supporting portions 244, such that the locking portion 240 moves in the direction of compressing the second elastic portions 243, and accordingly, the second abutting portions 2401 disengage from the first abutting portions 2410. Optionally, the locking portion 240 is set as a hook. The two unlocking portions 241, the two first elastic portions 242 and the two second elastic portions 243 are arranged. The unlocking portions 241 are set as buttons which are respectively arranged on the two sides of the external device interface 210 in the width direction W. The first elastic portions 242 and the second elastic portions 243 are set as springs, and the supporting portions 244 are arranged on the fixing plate 230.

When the external device 200 is required to be engaged to the battery pack 100, the unlocking portions 241 are first triggered, such that the locking portion 240 moves in the direction away from the external device 200, so as not to interfere with the housing 110 of the battery pack 100. As shown in FIG. 31, the battery pack 100 is moved along the back direction B of the front-back direction L or the external device 200 is moved along the front direction R of the front-back direction L, after a sliding groove 160 in the battery pack 100 is in sliding engaging with a sliding rail 260 on the external device 200 in place, the unlocking portions 241 are loosened, and the first elastic portions 242 and the second elastic portions 243 are restored to the loose state from a compression state, such that the locking portion 240 moves towards the external device 200, and the locking portion 240 is matched with the locking element 140, thereby locking the external device 200 and the battery pack 100; and when the battery pack 100 is required to be removed from the external device 200, only the unlocking portions 241 are required to be triggered, such that the locking portion 240 disengages from the locking element 140, then, the battery pack 100 is moved along the front direction R of the front-back direction L or the external device is moved along the back direction B of the front-back direction L, which makes the sliding rail 260 not matched with the sliding groove 160, thereby finishing complete disengagement of the battery pack 100 and the external device 200.

Please refer to FIG. 43 to FIG. 45, an electrical combination 20 includes the battery pack 100 and an external device 300.

Details of the battery pack 100 are referred to the foregoing parts, which are not repeated herein. In an embodiment, the external device 300 is set as a household appliance, and specifically, the household appliance is the camping lantern.

The external device 300 includes an external device interface 310 which is configured for being engaged to the battery pack 100 in the engaging direction. Optionally, the first electrical interface is set as the battery pack interface, and the second electrical interface is set as the external device interface 310. In other embodiments, the first electrical interface may also be set as the external device interface 310, and the second electrical interface is set as the battery pack interface. Specific setting manners of the first electrical interface and the second electrical interface may be referred to the foregoing parts, which are not repeated in the present disclosure.

In an embodiment, the electrical combination includes the battery pack 100 and an external device, and specifically, the external device is set as the charger.

Details of the battery pack 100 are referred to the foregoing parts, which are not repeated herein. The charger includes a charger interface, and the charger interface is configured for being engaged to the battery pack in the engaging direction to charge the battery pack 100. Similarly, the first electrical interface may be set as any one of the battery pack interface and the charger interface, and the second electrical interface may be set as the other one of the battery pack interface and the charger interface. Specific setting manners of the first electrical interface and the second electrical interface may be referred to the foregoing parts, which are not repeated in the present disclosure.

Please refer to FIG. 46 to FIG. 60, the electrical combination 30 includes an electrical device 200' and a power device 40. The power device 40 includes the battery pack 100 and an adapter 400, the electrical device 200' cannot be directly engaged to the battery pack 100, and when the battery pack 100 and the electrical device 200' are both engaged to the adapter 400, the battery pack 100 can be electrically connected with the electrical device 200'. The battery pack 100 and the electrical device 200' which have different interfaces can be engaged to the adapter 400, such that applicability of the battery pack 100 is wider.

Details of the battery pack 100 are referred to the first embodiment, which are not repeated herein. The electrical device 200' may be set as the electric tool or the charger. Certainly, the electrical device 200' may also be set as the household appliance or other devices. In this embodiment, the electrical device 200' is set as the electric tool, and specifically, is set as the electric drill. The electrical device 200' and the external device 200 are basically the same in other structure except for the structure of the electrical device interface being different.

As shown in FIG. 48, the electrical device 200' includes an electrical device interface 210'. The electrical device interface 210' is configured for being engaged to the adapter 400 in the front-back direction L, that is, the front-back direction L is set as the direction where the electrical device 200' is engaged to the adapter 400.

The electrical device interface 210' includes an external device sliding groove extending lengthwise in the front-back direction L. The electrical device sliding groove includes a first sliding groove 261' and a second sliding groove 262' which are respectively formed in the two sides of the electrical device interface 210' in the width direction W and configured for guiding the adapter 400 to be mechanically connected with the electrical device 200'.

The electrical device interface 210' includes a locking element 240' which is configured for locking and unlocking the electrical device 200' and the adapter 400. Optionally, the locking element 240' is set as a groove.

The electrical device interface 210' further includes a plurality of electrical device terminals 220' which are configured for being engaged to corresponding terminals of the adapter 400 so as to realize electrical connection of the adapter 400 and the electrical device 200'. Optionally, the electrical device terminals 220' are arranged between the first sliding groove 161b' and the second sliding groove 162b' and are spaced in the width direction W. Optionally, four electrical device terminals 220' may be arranged and respectively include an electrical device positive terminal 221', an electrical device negative terminal 222' and electrical device signal terminals 223' and 224', and the electrical device terminals 220' are set into a flat plate shape.

Please refer to FIG. 51 to FIG. 54, the adapter 400 includes a first adapter interface 410 and a second adapter interface 450. The first adapter interface 410 is configured for being engaged to the electrical device 200' in the front-back direction, and the second adapter interface 450 is configured for being engaged to the battery pack 100 in the front-back direction, in other words, the engaging direction of the electrical device 200' and the adapter 400 and the engaging direction of the battery pack 100 and the adapter 400 are both set as the front-back direction.

The first adapter interface 410 includes a first adapter sliding rail 411 and a second adapter sliding rail 412 which extend lengthwise in the front-back direction, the first adapter sliding rail 411 is matched with the first sliding groove 261', and the second adapter sliding rail 412 and the second sliding groove 262', so as to guide the adapter 400 to be mechanically connected with the electrical device 200'. Certainly, the electrical device interface 210' may also be set as sliding rail type interface, the first adapter interface 410' may also be set as a sliding groove type interface shown in the figure, and it is generally sufficient to achieve engagement of the electrical device interface 210' and the first adapter interface 410, which will not be limited in this application.

The first adapter interface 410 further includes a plurality of first adapter terminals 413. The first adapter terminals 413 include a first adapter positive terminal, a first adapter negative terminal and at least one first adapter signal terminal. When the adapter 400 is engaged to the electrical device 200', the first adapter positive terminal, the first adapter negative terminal and the first adapter signal terminals are respectively electrically connected with corresponding terminals of the electrical device 200'. The first adapter positive terminal, the first adapter negative terminal and the at least one first adapter signal terminal are spaced in the width direction W.

The first adapter terminals 413 are arranged between the first adapter sliding rail 411 and the second adapter sliding rail 412. As shown in FIG. 54, optionally, four first adapter terminals 413 are arranged and sequentially include: a first adapter positive terminal 415, a first adapter negative terminal 416 and first adapter signal terminals 417 and 418. Optionally, the first adapter terminals are set to be in a clamp shape shown in FIG. 20.

Optionally, the first electrical interface 10a is set as the battery pack interface, and the second electrical interface 10b is set as the second adapter interface 450.

The second adapter interface 450 includes a third adapter sliding rail 461 and a fourth adapter sliding rail 462 which extend lengthwise in the engaging direction, and are configured for guiding the adapter 400 to be mechanically connected with the battery pack 100. The second adapter interface 450 further includes a plurality of second adapter terminals 420. The second adapter terminals 420 include a second adapter positive terminal, a second adapter negative terminal and at least one second adapter signal terminal. The second adapter positive terminal is configured for being electrically connected with the battery pack positive terminal, the second adapter negative terminal is configured for being electrically connected with the battery pack negative terminal, the second adapter signal terminal is configured for being electrically connected with the battery pack signal terminal, and the second adapter positive terminal, the second adapter negative terminal and the at least one second adapter signal terminal are spaced in the engaging direction.

Optionally, four second adapter terminals 420 are arranged and sequentially include: a second adapter positive terminal 421, a second adapter negative terminal 422 and second adapter signal terminals 423 and 424. The second adapter positive terminal 421 is configured for being engaged to the battery pack positive terminal 121a, the second adapter negative terminal 422 is configured for being engaged to the battery pack negative terminal 122a, and the second adapter signal terminals 423 and 424 are respectively configured for being engaged to the battery pack signal terminals 123a and 124a.

In this embodiment, the second terminal 120b is set as the second adapter terminal 420, and the arrangement manner and the structural form of the second adapter terminals 420 may be referred to the foregoing parts, which are not repeated in the present disclosure.

The process of engagement of the battery pack 100 and the adapter 400 is similar to the process of engagement of the battery pack 100 and the external device 20, which is not repeated herein.

The adapter 400 includes an adapter housing 401. The adapter interface 410 is at least partially located at an upper end of the adapter housing 401. The adapter housing 401 includes a plurality of adapter terminal accommodating holes 413a for at least partially accommodating the adapter terminals 413. Each adapter terminal 413 is accommodated in the corresponding adapter terminal accommodating hole 413a. In the width direction W, the terminal accommodating holes 413a are located between the first adapter sliding rail 411 and the second adapter sliding rail 412. As shown in FIG. 46 and FIG. 47, when the adapter 400 is engaged to the electrical device 200', electrical device terminals 240' extend into the adapter terminal accommodating holes 413a and are engaged to the adapter terminals 413, the adapter 400 is located below the electrical device 200', and the electrical device interface 210' is at least partially located at a lower end of the adapter housing 401. When the adapter 400 is engaged to the battery pack 100, the adapter 400 is located above the battery pack 100.

The second adapter interface 450 further includes an arc portion 452. Specifically, the arc portion 452 is located at one end of the adapter housing 401, and when the battery pack 100 is engaged to the adapter 400, the arc portion 452 is attached to the top portion of the housing 110 of the battery pack 100.

The adapter 400 further includes an adapter circuit board 430, and the first adapter terminals 413 and the second adapter terminals 420 are all electrically connected with the adapter circuit board 430. As shown in FIG. 38, the second adapter interface 450 further includes an engaging surface 451, and the third adapter sliding rail 461 and the fourth adapter sliding rail 462 extend downwards from the engaging surface 451. Optionally, the second adapter interface 450 further includes a cover plate 453 located between a pair of second adapter sliding rails in the width direction W. The cover plate 453 is fixedly connected with the adapter housing 401, the adapter circuit board 430 is accommodated in a space formed by the adapter housing 401 and the cover plate 453, and the engaging surface 451 further includes an outer surface 455 on the side, away from the adapter circuit board 430, of the cover plate 453.

The adapter 400 further includes a first locking and releasing apparatus which is configured for locking and unlocking the adapter 400 and the electrical device 200'. As shown in FIG. 57 and FIG. 58, the first locking and releasing apparatus includes a first locking element 470 matched with the locking element 240' of the electrical device 200', a first unlocking element 471 configured for controlling the first locking element 470 to move, and a first elastic element 472 making the first locking element 470 reset and abutting against the first unlocking element 471. Optionally, the first locking element 470 is set as a hook, the first unlocking element 471 is set as a button, the first elastic element 472 is set as a spring, and the first locking element 470 and the first unlocking element 471 are integrally arranged.

When the adapter 400 is required to be engaged to the electrical device 200', the first unlocking element 471 is first triggered, as shown in FIG. 58, the first unlocking element 471 compresses the first elastic element 472, such that the first locking element 470 moves in the direction away from the electrical device 200', so as not to interfere with the electrical device 500', then the adapter 400 is moved along the back direction B of the front-back direction or the electrical device 200' is moved along the front direction R of the front-back direction, then, the first locking element 470 is loosened, as shown in FIG. 57, the first unlocking element 471 resets under the action of the first elastic element 472, the first locking element 470 is driven to move towards the electrical device 500', such that the first locking element 470 is matched with a locking element 440' of the electrical device 200', and as a result, the adapter 400 and the electrical device 200' are locked; and when the electrical device 200' is required to be removed from the adapter 400,only the first unlocking element 471 is required to be triggered, the first unlocking element 471 drives the first locking element 470 to disengage from the locking element 240' of the electrical device 200', then, the adapter 400 is moved along the front direction R of the front-back direction, or the electrical device 200' is moved along the back direction B of the front-back direction, such that the electrical device 200' completely disengages from the adapter 400.

The adapter 400 further includes a second locking and releasing apparatus which is configured for locking and unlocking the adapter 400 and the battery pack 100. As shown in FIG. 59 and FIG. 60, the second locking and releasing apparatus includes a second locking element 440 capable of moving between a locking position and an unlocking position, and second unlocking elements 441 for driving the second locking element 440 to move, and the second locking element 440 protrudes out of the cover plate 453.

The second locking element 440 can be matched with the locking portion 140 on the battery pack 100, so as to lock the adapter 400 and the battery pack 100. The second locking element 440 protrudes out of the cover plate 453, and optionally, an outer surface of the cover plate 453 does not have other protrusions except for the second locking element 440, which can prevent the cover plate 453 from interfering with the top of the housing 110 of the battery pack 100.

The second locking and releasing apparatus further includes second elastic elements 442 for making the second locking element 440 reset, a third elastic element 443 configured for making the second unlocking elements 441 reset, and supporting elements 444 arranged between the third elastic element 443 and the second locking element 440. One end of the second elastic element 442 is in cup joint to the second unlocking element 441, and the other end abuts against the supporting element 444. One end of the third elastic element 443 is in cup joint to a protruding element 445 below the adapter housing 401, and the other end abuts against the second locking element 440. The end, close to the second locking element 440, of the second unlocking element 441 is provided with a first abutting element 4410, and the end, close to the second unlocking element 441, of the second locking element 440 is provided with a second abutting element 4401. When the second unlocking elements 441 are not triggered, as shown in FIG. 59, the second elastic elements 442 and the third elastic element 443 are all in a loose state, and the first abutting elements 4410 abut against the second abutting elements 4401. When the second unlocking elements 441 are triggered, as shown in FIG. 60, the second elastic elements 442 are compressed, the second unlocking elements 441 drive the first abutting elements 4410 to move in the direction of the second abutting elements 4401, and the second locking element 440 is extruded by the supporting elements 444, such that the second locking element 440 moves in the direction of compressing the third elastic element 443, and accordingly, the second abutting elements 4401 disengage from the first abutting elements 4410. Optionally, a pair of second unlocking elements 441, a pair of second elastic elements 442 and a pair of supporting elements 444 are arranged, the second unlocking elements 441 are set as buttons to be respectively arranged on the two sides of the adapter interface 410, the third elastic element 443 and the first elastic element 472 are set to be the same, the protruding element 445 is arranged on the first unlocking element 471, and the supporting elements 444 are arranged on the cover plate 453.

When the adapter 400 is required to be engaged to the battery pack 100, the second unlocking elements 441 are first triggered, such that the second locking element 440 moves in the direction away from the battery pack 100, so as not to interfere with the top portion of the housing 110 of the battery pack 100, then, the battery pack 100 is moved along the back direction B of the front-back direction or the adapter 400 is moved along the front direction R of the front-back direction, and after the first sliding groove 161 and the second sliding groove 162 in the battery pack 100 are respectively in sliding fit with the third adapter sliding rail 461 and the fourth adapter sliding rail 462 in place, the second unlocking elements 441 are loosened, the second elastic elements 442 and the third elastic element 443 are restored to the loose state from a compression state, such that the second locking element 440 moves towards the battery pack 100 and is matched with the locking groove 140 in the battery pack, and accordingly the adapter 400 and the battery pack 100 are locked; and when the battery pack 100 is required to be removed from the adapter 400, only the second unlocking elements 441 are required to be triggered, such that the second locking element 440 disengages from the locking portion 140, then, the battery pack 100 is moved along the front direction R of the front-back direction or the adapter 400 is moved along the back direction B of the front-back direction, accordingly, the first sliding groove 161 and the second sliding groove 162 in the battery pack 100 are respectively not matched with the third adapter sliding rail 461 and the fourth adapter sliding rail 462, and as a result, the battery pack 100 disengages from the adapter 400.

Please refer to FIG. 61 and FIG. 62, an electrical combination 50 includes the power device 40 and an electrical device 500.

Details of the battery pack 100 and the power device 40 are referred to the foregoing parts, which are not repeated herein. In this embodiment, the electrical device 500 is set as the charger, and when the charger is connected with commercial power and is engaged to the power device 40, the electrical device 500 can charge the battery pack 100.

The electrical device 500 includes an electrical device interface 510 which is configured for being engaged to the first adapter interface 410 in the front-back direction. Optionally, the first electrical interface 10a is set as the battery pack interface, the second electrical interface 10b is set as the first adapter interface 410, and specific structures are not repeated.

As shown in FIG. 63 to FIG. 67, an electrical combination 60 includes a power device 40' and an electrical device 600. The power device 40' includes the battery pack 100 and an adapter 400'.

Details of the battery pack 100 are referred to the foregoing parts, which are not repeated herein. The electrical device 600 cannot be directly engaged to the battery pack 100, and when the battery pack 100 and the electrical device 600 are both engaged to the adapter 400', the battery pack 100 can be electrically connected with the electrical device 600. In this embodiment, the electrical device 600 is set as a kind of household appliance. Specifically, the electrical device 600 is set as electric scissors. Certainly, the electrical device 600 may also be set as other household appliances or electric tools. The battery pack 100 and the electrical device 600 which have different interfaces can be engaged to the adapter 400', such that applicability of the battery pack 100 is wider.

Please refer to FIG. 68, the electrical device 600 includes an electrical device interface 610. The electrical device interface 610 is configured for being engaged to the adapter 400' in the front-back direction L, that is, the front-back direction L is set as the direction where the electrical device 600 is engaged to the adapter 400.

The electrical device interface 610 includes a plurality of electrical device terminals 620 and terminal accommodating holes 620a configured for accommodating the electrical device terminals 620 to be electrically connected with corresponding terminals of the adapter 400'. Optionally, three electrical device terminals 620 are arranged, and include an electrical device positive terminal 621, an electrical device negative terminal 622 and an electrical device signal terminal 623. Optionally, the electrical device terminals 620 are set as slots to be evenly distributed in the terminal accommodating holes 620a.

The adapter 400' similarly includes a first adapter interface 410' and a second adapter interface 450'. The first adapter interface 410' is configured for being engaged to the electrical device 600 in the front-back direction, and the second adapter interface 450' is configured for being engaged to the battery pack 100 in the engaging direction. In this embodiment, the first electrical interface 10a is set as the battery pack interface, the second electrical interface 10b is set as the second adapter interface 450', and specific setting manners of the second adapter interface 450' may be referred to the foregoing parts, which are not repeated herein.

The first adapter interface 410' includes a cable 411' and a connector 412', one end of the connector 412' is connected with the cable 411', and the other end of the connector 412' is configured for being connected with the electrical device 600. Optionally, one end of the connector 412' is fixedly connected with the cable 411', and the other end of the connector 412' is detachably connected with the electrical device 600.

The connector 412' includes a plurality of first adapter terminals 413' and terminal accommodating holes 413a' configured for accommodating the first adapter terminals 413'. The first adapter terminals 413' are configured for being connected with the electrical device terminals 620 in a matched manner, thereby realizing electrical connection of the adapter 400' and the electrical device 600. Optionally, corresponding to the electrical device terminals 620, three first adapter terminals 413' are arranged, and include a first adapter positive terminal 415', a first adapter negative terminal 416' and a first adapter signal terminal 417'. Optionally, the first adapter terminals 413' are set as pins to be evenly distributed in the terminal accommodating holes 413a'.

The adapter 400' further includes a locking and releasing apparatus which is configured for being matched with the locking portion 140 on the battery pack 100, so as to lock and unlock the adapter 400' and the battery pack 100. The locking and releasing apparatus includes a locking element 440' matched with the locking portion 140 on the battery pack 100, and an unlocking element 441" for driving the locking element 440' to move, and the structure of the locking and releasing apparatus of the adapter 400' is basically the same with the structure of the second locking and unlocking apparatus of the adapter 400, which is not repeated herein.

The adapter 400' further includes an operating unit. The operating unit includes a switch 480' which is configured for controlling the battery pack 100 to transmit power to the electrical device 600, thereby controlling on or off of a motor (not shown) arranged in the electrical device 600. When the electrical device 600 is required to be started, the user only needs to trigger the switch 480', and the power flows to the motor from the battery pack 100 through a control apparatus (not shown) arranged in the electrical device 600. Optionally, the switch 480' is set as a button located on a housing of the adapter 400'.

The operating unit further includes a regulating switch 490' which is configured for controlling the working state of the electrical device 600. When the user triggers the regulating switch 490', the control apparatus (not shown) arranged in the electrical device 600 generates an adjusting signal for adjusting working parameters of the electrical device 600 and transmits the adjusting signal to the electrical device 600, or the electrical device 600 actively acquires the adjusting signal, such that the electrical device 600 may adjust the working parameters according to the adjusting signal. The adjusting signal may be set as a speed adjusting signal, a temperature adjusting signal or other signals for adjustment. Optionally, the regulating switch 490' is set as a speed adjusting button located on the housing of the adapter 400', and when the user rotates the regulating switch 490' to different gears, the motor in the electrical device 600 can output different rotational speeds.

In other embodiments, the switch 480' and the regulating switch 490' may also be integrated, to simplify an operation interface of the adapter 400'.

In some embodiments, the electrical combination includes the external device and the adapter.

The external device may be set as the electric tool, or the charger, or the household appliance, or other devices.

The adapter includes the adapter interface connected with the external device. Optionally, the first electrical interface 10a is set as the adapter interface, and the second electrical interface 10b is set as the external device interface.

Further, the adapter further includes a 3C interface. When the external device is connected with the adapter, the external device can be connected with a power bank or other external power supplies through the 3C interface, such that the external power supplies can supply power to the external device. Optionally, the 3C interface is set as a Type-C interface.

As shown in FIG. 68, an electrical system 1 includes the battery pack 100 and various external devices capable of being engaged to the battery pack 100.

Details of the battery pack 100 are referred to the foregoing parts, which are not repeated herein. The various external devices may include the electric tool, such as an electric drill 200; or may be set as the household appliance, such as a camping lantern 710, a car vacuum cleaner 720, a flashlight 730, an electric fan 740 and an air pump 750; or may be set as the charger (not shown in the figure). The various external devices include the same external device interface. Similarly, the first electrical interface may be set as any one of the battery pack interface and the external device interface, and the second electrical interface may be set as the other one of the battery pack interface and the external device interface. Specific setting manners of the first electrical interface and the second electrical interface may be referred to the foregoing parts, which are not repeated in the present disclosure.

Please refer to FIG. 69, an electrical system 2 includes various electrical devices and the power device 40 capable of being engaged to the electrical devices.

The various electrical devices may include the electric tool, such as an electric drill 200'; or may be set as a charger 500, or the household appliance (not shown in the figure). The various electrical devices include the same electrical device interface. In this embodiment, the structure of the electrical device interface 510 and the structure of the electrical device interface 210' are basically the same.

As shown in FIG. 70, an electrical system 3 includes various electrical devices and an adapter 40' capable of being engaged to the electrical devices.

The various electrical devices may include the electric tool, such as a heat gun 610, a spray gun 620, electric scissors 600, a mini straight grinder 630, a glue gun 640 and an electric soldering iron 650 shown in FIG. 70; and or may set as various household appliances, such as pet scissors (not shown in the figure). The various electrical devices include the same electrical device interface. In this embodiment, the same electrical device interface is set as the electrical device interface 610.

Various technical features of the foregoing embodiments may be combined at will. For brevity of the description, it is unnecessary to describe all possible combinations of the various technical features of the foregoing embodiments; however, the combinations of these technical features should fall within the scope recorded by this specification as long as there is no contradiction.

The foregoing embodiments only show several implementations of the present disclosure, which are specifically described in detail but cannot be understood as limitations on the patent scope of the present disclosure. It should be noted that a plurality of transformations and improvements can also be made by those of ordinary skill in the art without departing from the conception of the present disclosure, which fall within the scope of protection of the present disclosure.

## Claims

1. A first electrical interface, being arranged on one of a battery pack and an external device, wherein the battery pack is configured for engaging to the external device, the first electrical interface comprises a first sliding groove and a second sliding groove which extend in an engaging direction, and are configured for guiding the battery pack to be mechanically connected with the external device; the first electrical interface further comprises a plurality of first terminals configured for being electrically connected with corresponding terminals of the other one of the battery pack and the external device; and at least one of first terminals is at least partially accommodated in the first sliding groove, and/or at least one of first terminals is at least partially accommodated in the second sliding groove.

2. The first electrical interface according to claim 1, wherein the first terminals are at least partially accommodated in the first sliding groove and/or the second sliding groove.

3. The first electrical interface according to claim 1, wherein the number of first terminals at least partially accommodated in the first sliding groove is equal to the number of first terminals at least partially accommodated in the second sliding groove.

4. The first electrical interface according to claim 1, wherein the first terminals comprise at least one first positive terminal and at least one first negative terminal, the first positive terminal and the first negative terminal are configured for transmitting power, the first positive terminal is at least partially accommodated in the first sliding groove, and the first negative terminal is at least partially accommodated in the second sliding groove.

5. The first electrical interface according to claim 4, wherein the first terminals further comprise at least one first signal terminal, the first signal terminal is configured for transmitting control signals, the first terminals at least partially accommodated in the first sliding groove comprise the first positive terminal and at least one first signal terminal, and/or the first terminals at least partially accommodated in the second sliding groove comprise the first negative terminal and at least one first signal terminal.

6. The first electrical interface according to claim 5, wherein one of the battery pack and the external device comprises an initial end and a tail end which are opposite in the engaging direction, when the battery pack is engaged to the external device, the initial end makes contact with the other one of the battery pack and the external device earlier than the tail end, and the first signal terminal is closer to the initial end relative to the first positive terminal or the first negative terminal.

7. The first electrical interface according to claim 1, wherein the first sliding groove and the second sliding groove respectively comprise a pair of side walls which extend in the engaging direction and are oppositely arranged, a bottom wall arranged between the pair of side walls, and at least one first terminal is at least partially exposed from openings formed in the side walls and/or the bottom wall.

8. The first electrical interface according to claim 1, wherein the first sliding groove and the second sliding groove respectively comprise a pair of side walls which extend in the engaging direction and are oppositely arranged, a bottom wall arranged between the pair of side walls, and at least one first terminal is at least partially arranged on the side walls and/or the bottom wall.

9. The first electrical interface according to claim 1, wherein the other one of the battery pack and the external device comprises a second electrical interface, the second electrical interface further comprises a plurality of second terminals correspondingly connected with the first terminals, the first terminal has an elastic contact portion, the second terminal has an engaging portion configured for being matched with the contact portion, and the contact portion makes contact with the corresponding engaging portion only on one side of the engaging direction.

10. The first electrical interface according to claim 9, wherein when the contact portion is matched with the engaging portion, the positive pressure exerted on the contact portion ranges from 0 to 100 N.

11. The first electrical interface according to claim 10, wherein when the contact portion is matched with the engaging portion, the amount of elastic deformation of the contact portion ranges from 0 to 1.5 mm.

12. The first electrical interface according to claim 10, wherein the elasticity modulus of the contact portion ranges from 100,000 to 150,000 MPa.

13. The first electrical interface according to claim 10, wherein the contact portion is set to be arc shape, and the engaging portion is set to be in a flat plate shape.

14. A second electrical interface, configured for engaging to engaged to the first electrical interface according to claim 1, wherein the second electrical interface is arranged on the other one of the battery pack and the external device, and further comprises a first sliding rail and a second sliding rail which extend in the engaging direction, the first sliding rail is matched with the first sliding groove, and the second sliding rail is matched with the second sliding groove to guide engagement between the external device and the battery pack; and the second electrical interface comprises a plurality of second terminals, and the second terminal is matched with the first terminal to realize electrical connection between the second electrical interface and the first electrical interface.

15. The second electrical interface according to claim 14, wherein at least one second terminal is at least partially located on the first sliding rail, and/or at least one second terminal is at least partially located on the second sliding rail.

16. The second electrical interface according to claim 15, wherein projection areas, in a plane perpendicular to the engaging direction, of at least one second terminal and the first sliding rail are at least partially overlapped, and/or projection areas, in the plane perpendicular to the engaging direction, of at least one second terminal and the second sliding rail are at least partially overlapped.

17. The second electrical interface according to claim 15, wherein the second terminals are at least partially located on the first sliding rail and/or the second sliding rail.

18. The second electrical interface according to claim 15, wherein the number of second terminals at least partially located on the first sliding rail is equal to the number of second terminals at least partially located on the second sliding rail.

19. The second electrical interface according to claim 15, wherein the second terminals further comprise at least one second positive terminal and at least one second negative terminal, the second positive terminal and the second negative terminal can be respectively electrically connected with the corresponding terminals of the first electrical interface, the second positive terminal is at least partially located on the first sliding rail, and/or the second negative terminal is at least partially located on the second sliding rail.

20. The second electrical interface according to claim 19, wherein the second terminals further comprise at least one second signal terminal, the second positive terminal and the at least one second signal terminal are at least partially located on the first sliding rail, and/or the second negative terminal and the at least one second signal terminal are at least partially located on the second sliding rail.

21. The second electrical interface according to claim 20, wherein the other one of the battery pack and the external device comprises a first end and a second end which are opposite in the engaging direction, when the battery pack is engaged to the external device, the first end makes contact with one of the battery pack and the external device earlier than the second end, and the second positive terminal or the second negative terminal is closer to the first end relative to the second signal terminal.

22. The second electrical interface according to claim 15, wherein the first sliding rail and the second sliding rail both comprise a pair of side edges which extend in the engaging direction and are oppositely arranged, a bottom edge arranged between the pair of side edges, and at least one second terminal is at least partially exposed from openings formed in the side edges and/or the bottom edge.

23. The second electrical interface according to claim 15, wherein the first sliding rail and the second sliding rail both comprise a pair of side edges which extend in the engaging direction and are oppositely arranged, a bottom edge arranged between the pair of side edges, and at least one second terminal is at least partially arranged on the side edges and/or the bottom edge.

24. The second electrical interface according to claim 15, wherein the second terminal has an elastic contact portion, the first terminal has the engaging portion matched with the contact portion, and the contact portion makes contact with the engaging portion only on one side of the engaging direction.

25. The second electrical interface according to claim 24, wherein when the contact portion is matched with the engaging portion, the positive pressure exerted on the contact portion ranges from 0 to 100 N.

26. The second electrical interface according to claim 25, wherein when the contact portion is matched with the engaging portion, the amount of elastic deformation of the contact portion ranges from 0 to 1.5 mm.

27. The second electrical interface according to claim 25, wherein the elasticity modulus of the contact portion ranges from 100,000 to 150,000 MPa.

28. The second electrical interface according to claim 25, wherein the contact portion is set to be arc shape, and the engaging portion is set to be in a flat plate shape.

29. A battery pack, wherein the battery pack comprises the first electrical interface according to any one of claims 1 to 13, or the second electrical interface according to any one of claims 14 to 28.

30. An external device, wherein the external device comprises the first electrical interface according to any one of claims 1 to 13, or the second electrical interface according to any one of claims 14 to 28.

31. The external device according to claim 30, wherein the external device is set as any one of an electric tool, a household appliance, a charger and an adapter.

32. An electrical combination, wherein the electrical combination comprises a battery pack and an external device which can be engaged to each other, the battery pack is set as the battery pack according to claim 29, and the external device is set as the external device according to claim 30.

33. A battery pack, being configured for engaging to an external device, comprising:
a housing, the housing accommodating a plurality of electrically-connected cells; and
a plurality of battery pack terminals, the battery pack terminals comprise a battery pack positive terminal, a battery pack negative terminal and at least one battery pack signal terminal, the battery pack positive terminal and the battery pack negative terminal are respectively electrically connected to the cells, the battery pack signal terminal transmits control signals of the battery pack, and each battery pack terminal can be electrically connected with the corresponding terminal of the external device; and
wherein the battery pack terminals are arranged in two columns, and at least one column of battery pack terminals are spaced in the engaging direction.

34. The battery pack according to claim 33, wherein projection areas, in a plane perpendicular to the engaging direction, of the same-column battery pack terminals are at least partially overlapped.

35. The battery pack according to claim 34, wherein the battery pack terminal comprises at least one contact portion, the contact portion is in elastic fit with the corresponding terminal of the external device, such that the battery pack terminals are electrically connected with the terminals of the external device, and projection areas, in the plane perpendicular to the engaging direction, of the same-column battery pack terminals are at least partially overlapped.

36. The battery pack according to claim 33, wherein each column has the same number of battery pack terminals.

37. The battery pack according to claim 33, wherein the battery pack positive terminal is located in one column, and the battery pack negative terminal is located in the other column.

38. The battery pack according to claim 37, wherein the battery pack positive terminal and the at least one battery pack signal terminal are spaced in the engaging direction, and/or the battery pack negative terminal and the at least one battery pack signal terminal are spaced in the engaging direction.

39. The battery pack according to claim 38, wherein the battery pack comprises an initial end and a tail end which are opposite in the engaging direction, when the battery pack is engaged to the external device, the initial end makes contact with the external device earlier than the tail end, and the battery pack signal terminal is closer to the initial end relative to the battery pack positive terminal or the battery pack negative terminal.

40. The battery pack according to claim 39, wherein in a height direction, the battery pack positive terminal and the battery pack signal terminal located in the same column are staggered from each other, and the battery pack negative terminal and the battery pack signal terminal located in the same column are staggered from each other.

41. The battery pack according to claim 39, wherein in a width direction, the battery pack positive terminal and the battery pack signal terminal located in the same column are staggered from each other, and the battery pack negative terminal and the battery pack signal terminal located in the same column are staggered from each other.

42. The battery pack according to claim 39, wherein the battery pack positive terminal is configured for being engaged to the external device positive terminal, the battery pack negative terminal is configured for being engaged to the external device negative terminal, in the engaging direction, a shortest distance between the battery pack positive terminal and the battery pack signal terminal located in the same column is greater than the size of the external device positive terminal, and/or a shortest distance between the battery pack negative terminal and the battery pack signal terminal located in the same column is greater than the size of the external device negative terminal.

43. An external device, comprising an external device interface, wherein the external device interface is configured for being engaged to the battery pack according to any one of claims 33 to 42, and the external device interface comprises a plurality of external device terminals, the external device terminals comprise an external device positive terminal, an external device negative terminal and at least one external device signal terminal, and the external device positive terminal, the external device negative terminal and the external device signal terminal are capable of being electrically connected with the corresponding terminals of the battery pack; and the external device terminals are arranged in two columns, and at least one column of external device terminals are spaced in the engaging direction.

44. The external device according to claim 43, wherein projection areas, in a plane perpendicular to the engaging direction, of the same-column external device terminals are at least partially overlapped.

45. The external device according to claim 44, wherein each external device terminal comprises at least one engaging portion, the engaging portions are in elastic fit with the battery pack terminals so as to realize electrical connection of the external device terminals and the battery pack terminals, and projection areas, in the plane perpendicular to the engaging direction, of the engaging portions of the same-column external device terminals are at least partially overlapped.

46. The external device according to claim 43, wherein each column has the same number of external device terminals.

47. The external device according to claim 43, wherein the external device positive terminal is located in one column, and the external device negative terminal is located in the other column.

48. The external device according to claim 43, wherein the external device positive terminal and the external device signal terminal are spaced in the engaging direction, and/or the external device negative terminal and the external device signal terminal are spaced in the engaging direction.

49. The external device according to claim 48, wherein the external device interface comprises a first end and a second end which are opposite in the engaging direction, when the external device is engaged to the battery pack, the first end makes contact with the battery pack earlier than the second end, and the external device positive terminal or the external device negative terminal is closer to the first end relative to the external device signal terminal.

50. The external device according to claim 48, wherein in a height direction, the external device positive terminal or the external device negative terminal and the external device signal terminal located in the same column are staggered from each other.

51. The external device according to claim 48, wherein in a width direction, the external device positive terminal or the external device negative terminal and the external device signal terminal located in the same column are staggered from each other.

52. The external device according to claim 48, wherein the external device positive terminal is configured for being engaged to the battery pack positive terminal, the external device negative terminal is configured for being engaged to the battery pack negative terminal, in the engaging direction, the size of the external device positive terminal is less than the shortest distance between the battery pack positive terminal and the battery pack signal terminal located in the same column, and the size of the external device negative terminal is less than the shortest distance between the battery pack negative terminal and the battery pack signal terminal located in the same column.

53. The external device according to any one of claims 43 to 52, wherein the external device is set as an electrical device or an adapter, and the electrical device is set as any one of an electric tool, a household appliance and a charger.

54. The external device according to any one of claims 43 to 52, wherein the external device is set as the adapter, the adapter further comprises a first adapter interface configured for being engaged to the electrical device, the electrical device further comprises an electrical device interface engaged to the first adapter interface, the electrical device interface cannot be adaptive to the battery pack according to any one of claims 33 to 42, and the electrical device is set as any one of the electric tool, the household appliance and the charger.

55. The external device according to claim 54, wherein the first adapter interface comprises a plurality of first adapter terminals configured for being electrically connected with the corresponding terminals of the electrical device, and spaced in a width direction.

56. The external device according to claim 54, wherein the first adapter interface comprises a cable and a connector, one end of the connector is configured for being connected with the cable, and the other end of the connector is configured for being connected with the external device.

57. The external device according to claim 56, wherein one end of the connector is fixedly connected with the cable, and the other end of the connector is detachably connected with the external device.

58. The external device according to claim 56, wherein the first adapter interface comprises a plurality of first adapter terminals arranged in the connector, and the first adapter terminals are configured for being electrically connected with the corresponding terminals of the electrical device and are set as pins.

59. An electrical combination, wherein the electrical combination comprises the battery pack according to any one of claims 33 to 42 and the external device according to any one of claims 54 to 58, or the electrical combination comprises the battery pack according to any one of claims 33 to 42, and the electrical device and the adapter according to claim 53.

60. An electrical combination, wherein the electrical combination comprises an electrical device, the battery pack according to any one of claims 33 to 42 and the external device according to any one of claims 54 to 58, the electrical device comprises an electrical device interface which is not adaptive to the battery pack according to any one of claims 33 to 42, and the electrical device is set as any one of an electric tool, a household appliance and a charger.
